# DEMANDE DE BREVET EUROPEEN

(11) **EP 4 733 979 A1**
(43) Date de publication de la demande: **29.04.2026**
(21) Numéro de dépôt: 24209307.8
(22) Date de dépôt: 28.10.2024
(51) Int. Cl.: G06F 40/30, G06Q 50/18, G06N 3/0475, G06F 40/211, G06F 40/253

(54) **PROCÉDÉ D'ANALYSE STYLOMÉTRIQUE DE DOCUMENTS BREVETS PAR SEGMENTATION, EXTRACTION DE CARACTÉRISTIQUES TECHNIQUES ET GÉNÉRATION D'UN GRAPHE DE DONNÉES**

(71) Demandeur: Lipstip, 64000 Pau (FR)
(72) Inventeur: DEMONDA, Ghislain, 64000 PAU (FR)
(74) Mandataire: A.P.I. Conseil

(57) **Abrégé**

L'invention concerne un procédé d'analyse stylométrique de documents brevets qui segmente le document en parties description et revendications, extrait les caractéristiques techniques unitaires et les paragraphes élémentaires, puis génère un graphe de données représentant leurs relations sémantiques.

Un vecteur de caractéristiques stylométriques est calculé, intégrant des scores de similarité sémantique et la distribution spatiale des caractéristiques techniques.

L'analyse par apprentissage machine de la topologie du graphe et du vecteur permet de déterminer des indicateurs de structure et des styles de répartition des informations techniques propres à chaque brevet.

Cette approche capture finement l'architecture informationnelle et stylistique des brevets, facilitant leur compréhension et leur comparaison.

## Description

### Domaine technique

L'invention se rapporte au domaine de l'analyse automatisée de documents, et plus particulièrement à l'analyse stylométrique de la structure des documents brevets.

Elle s'inscrit dans le contexte du traitement et de l'extraction d'informations à partir de documents techniques complexes, tels que les brevets, afin d'en faciliter la compréhension, la comparaison et l'exploitation.

### Technique antérieure

Les documents brevets présentent une structure particulière et un contenu technique dense qui les rendent difficiles à appréhender de manière globale et comparative.

Les outils d'analyse existants se concentrent souvent sur l'extraction de mots-clés ou la classification thématique, sans réellement capturer la structure profonde et les spécificités stylistiques de ces documents.

En particulier, les techniques actuelles ne permettent pas une analyse fine de la répartition et des relations entre les caractéristiques techniques décrites dans les différentes parties d'un brevet.

Elles ne fournissent pas non plus d'indicateurs synthétiques sur la structure et le style de rédaction propres à chaque document.

Ces limitations empêchent une comparaison efficace entre brevets et une compréhension rapide de leur architecture informationnelle, ce qui complique les tâches de recherche, d'analyse et de validation pour les experts comme pour les outils de traitement automatique.

Ainsi, il existe un besoin pour une méthode d'analyse capable de capturer efficacement la structure profonde et les spécificités rédactionnelles des documents brevets, tout en offrant des indicateurs synthétiques sur l'architecture informationnelle et le style de rédaction propres à chaque document.

Une telle méthode permettrait de répondre aux limitations des techniques actuelles d'analyse des brevets, en permettant une comparaison plus fine et pertinente entre documents, tout en facilitant les tâches de recherche, d'analyse et de validation pour les experts comme pour les outils de traitement automatique, notamment grâce à une compréhension plus rapide et globale de l'organisation des informations techniques au sein des brevets.

### Résumé de l'invention

L'invention vise à résoudre, au moins partiellement, ce besoin.

À ce titre, l'invention concerne des systèmes et procédés d'analyse stylométrique personnalisée de documents brevets numériques, comme décrit dans les revendications ci-jointes.

Des revendications dépendantes décrivent des modes de réalisation spécifiques de la présente invention.

Ces aspects et d'autres de la présente invention seront apparents et élucidés sur la base des modes de réalisation décrits ci-après. En particulier, l'invention propose une méthode d'analyse originale basée sur la segmentation des documents brevets, l'extraction de caractéristiques techniques, la génération d'un graphe de données et le calcul d'un vecteur de caractéristiques stylométriques. Des indicateurs de structure et de style de répartition des caractéristiques techniques sont déterminés par apprentissage machine. Des modes de réalisation détaillent des techniques avancées telles que des métriques de densité technique adaptative, la prise en compte de la structure hiérarchique des revendications, et l'optimisation dynamique des paramètres d'analyse.

### Brève description des dessins

D'autres caractéristiques et avantages de l'invention seront mieux compris à la lecture de la description qui va suivre et en référence aux dessins annexés, donnés à titre illustratif et nullement limitatif.

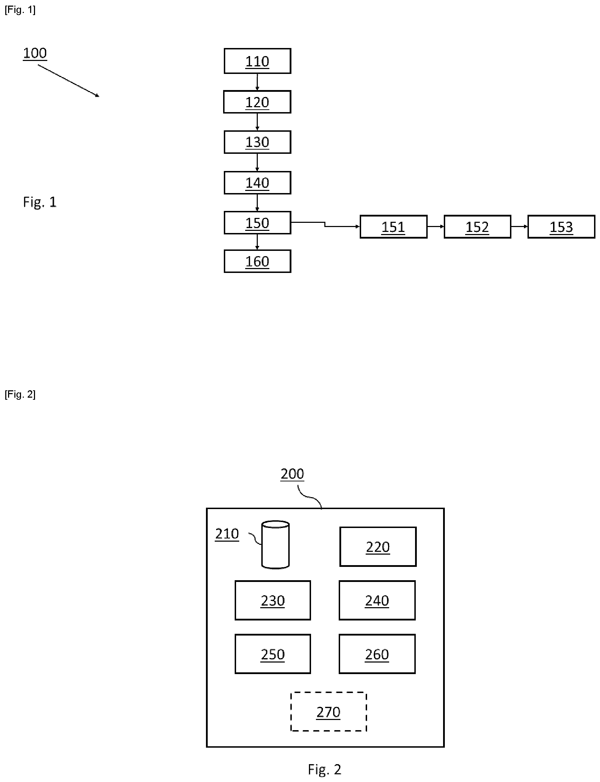

La figure 1 représente un ordinogramme d'un procédé selon un premier aspect de l'invention.
La figure 2 représente un système selon un deuxième aspect de l'invention.

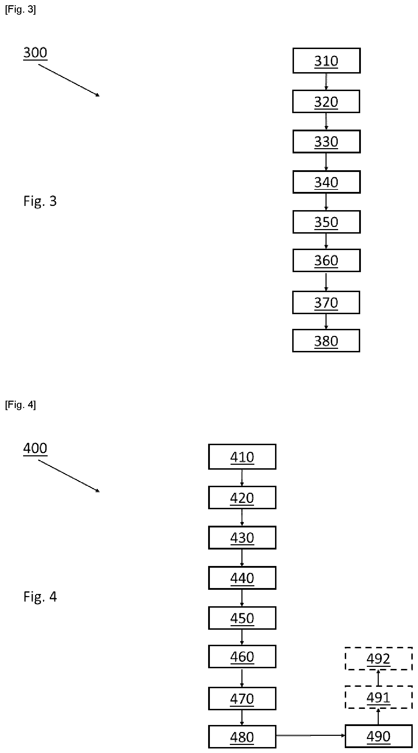

La figure 3 représente un ordinogramme d'un procédé selon un troisième aspect de l'invention.
La figure 4 représente un ordinogramme d'un procédé selon un quatrième aspect de l'invention.

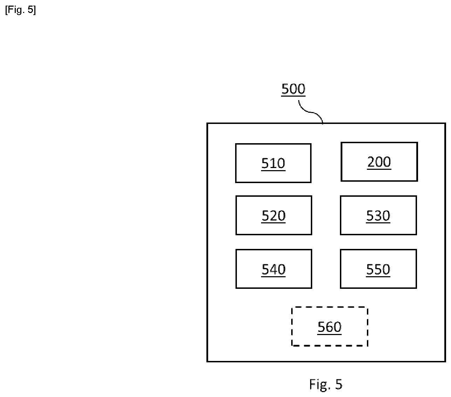

La figure 5 représente un système selon un cinquième aspect de l'invention.

Les figures ne respectent pas nécessairement les échelles, notamment en épaisseur, et ce, à des fins d'illustration.

En outre, certains dessins sont présentés en niveaux de gris/couleurs/transparence, car leur représentation en noir et blanc est impossible. En particulier, les niveaux de gris/les couleurs/la transparence sont nécessaires dans ces dessins pour discerner des détails qui seraient perdus s'ils étaient présentés en noir et blanc.

### Description des modes de réalisation

### Remarques préliminaires

Afin de ne pas obscurcir la description et détourner le lecteur de la compréhension des enseignements de l'invention, nos explications n'iront pas au-delà de ce qui est considéré comme nécessaire pour la compréhension et l'appréciation des concepts sous-jacents de l'invention. En effet, les modes de réalisation illustrés dans la description sont, pour la plupart, composés d'éléments connus de la personne du métier.

### Objectif de l'invention

L'un des objectifs principaux de l'invention est de proposer une méthode d'analyse stylométrique permettant de capturer finement la structure et le style de rédaction spécifiques à chaque document brevet, en tenant compte de la répartition des caractéristiques techniques.

Le terme « stylométrie » désigne une méthode d'analyse quantitative qui examine les caractéristiques stylistiques et structurelles d'un document. Dans le contexte spécifique de cette invention, la stylométrie est appliquée aux documents brevets afin d'identifier et de quantifier des éléments stylistiques et structurels qui sont caractéristiques de la rédaction et de l'organisation de ces documents techniques particuliers.

En pratique, les inventeurs proposent un procédé qui segmente le document en parties distinctes (description et revendications), extrait les caractéristiques techniques unitaires et les paragraphes élémentaires, puis génère un graphe de données représentant leurs relations.

Ce graphe fait apparaître la distribution spatiale des caractéristiques techniques dans le document et les liens sémantiques qui les unissent aux paragraphes de la description.

Des métriques quantitatives, comme des scores de similarité sémantique, sont calculées pour chaque relation. Un vecteur de caractéristiques stylométriques est généré pour synthétiser ces informations. Enfin, l'analyse de la topologie du graphe et du vecteur par apprentissage machine permet de déterminer des indicateurs de structure et des styles de répartition des informations techniques propres à chaque brevet.

### Premier aspect de l'invention : procédé d'analyse stylométrique de la structure d'un document brevet numérique par segmentation, extraction de caractéristiques techniques et génération d'un graphe de données

Un premier aspect de l'invention concerne un procédé 100 implémenté par ordinateur, c'est-à-dire une série d'étapes prédéfinies qui sont réalisées de manière séquentielle un système informatique.

En pratique, le procédé 100 concerne l'analyse stylométrique de la structure d'un document brevet numérique.

Le terme « analyse stylométrique » fait référence à une méthode d'étude quantitative qui examine les caractéristiques stylistiques et structurelles d'un document brevet numérique. Cette analyse vise à identifier et à quantifier des éléments stylistiques et structurels qui sont caractéristiques de la rédaction et de l'organisation du document brevet numérique.

Le terme « document brevet numérique » désigne un document officiel qui décrit une invention et établit les droits de propriété intellectuelle associés. À titre d'exemple, le terme « document brevet numérique » peut se référer à un brevet d'invention décrivant un nouveau procédé chimique, un brevet portant sur un dispositif électronique innovant, un document de brevet détaillant une méthode de traitement de données, ou encore un brevet couvrant une nouvelle composition pharmaceutique.

En particulier, le document brevet numérique comprend une description D et un jeu de revendications R.

Le terme « description » fait référence à la partie du document brevet numérique qui fournit une explication détaillée de l'invention. Cette section présente les aspects techniques, les principes de fonctionnement et les applications possibles de l'invention de manière claire et complète. À titre d'exemple, le terme « description » peut comprendre des explications techniques sur le fonctionnement d'un nouveau moteur, des détails sur la composition et la fabrication d'un nouveau matériau, une présentation des étapes d'un procédé innovant, ou encore des schémas et des explications sur la structure d'un dispositif breveté.

Le terme «jeu de revendications » désigne l'ensemble des revendications présentes dans un document brevet numérique. Ces revendications définissent la portée légale de la protection demandée pour l'invention. Chaque revendication décrit un aspect spécifique de l'invention pour lequel une protection est demandée. À titre d'exemple, le terme «jeu de revendications » peut inclure une revendication principale décrivant les éléments essentiels d'un nouveau dispositif, des revendications dépendantes qui ajoutent des caractéristiques spécifiques à ce dispositif, des revendications de méthode décrivant les étapes d'un procédé breveté, ou encore des revendications portant sur différentes applications d'une nouvelle technologie.

En pratique, le procédé 100 comporte plusieurs étapes : une étape de segmentation 110 du document brevet numérique, une étape d'extraction 120 par analyse syntaxique et sémantique, une étape de génération 130 d'un graphe de données GD, une étape de calcul 140 de scores de similarité sémantique S, une étape de génération 150 d'un vecteur de caractéristiques stylométriques VCS, et une étape d'analyse 160 de la topologie du graphe de données GD.

### - Segmentation du document brevet numérique en parties description et revendications

L'étape de segmentation 110 divise le document brevet numérique en une partie description D et une partie revendications R.

Cette division permet de traiter séparément la description et le jeu de revendications, facilitant ainsi l'analyse spécifique de chaque partie. À titre d'exemple, cela peut désigner l'action de séparer automatiquement la section de description de la section des revendications dans un document brevet numérique, l'identification et l'isolation des paragraphes de la description pour une analyse ultérieure, la séparation des revendications individuelles au sein du jeu de revendications, ou encore la distinction entre les parties textuelles et les figures dans la description du brevet.

### - Extraction par analyse syntaxique et sémantique de caractéristiques techniques unitaires (CTU) des revendications et de paragraphes élémentaires (PE) de la description

Ensuite, l'étape d'extraction 120 procède par analyse syntaxique et sémantique pour obtenir un ensemble de caractéristiques techniques unitaires CTU de la partie revendications R ainsi qu'un ensemble de paragraphes élémentaires PE de la partie description D.

Le terme « analyse syntaxique et sémantique » désigne un processus d'examen approfondi du texte qui combine l'étude de la structure grammaticale (syntaxe) et du sens (sémantique) des phrases. Dans l'invention, cette analyse est appliquée aux parties du document brevet numérique pour extraire des informations spécifiques. L'analyse syntaxique examine la construction des phrases, tandis que l'analyse sémantique se concentre sur leur signification dans le contexte du brevet. À titre d'exemple, le terme « analyse syntaxique et sémantique » peut inclure l'identification des structures de phrases caractéristiques des revendications de brevet, l'extraction des termes techniques clés et de leurs relations dans la description, la reconnaissance des éléments définissant une caractéristique technique dans une phrase, ou encore l'interprétation du sens précis d'une expression technique dans le contexte spécifique de l'invention décrite.

Le terme « caractéristiques techniques unitaires » fait référence aux éléments techniques individuels et distincts qui sont extraits du jeu de revendications du document brevet numérique. Ces caractéristiques représentent les aspects techniques spécifiques et essentiels de l'invention qui sont revendiqués pour protection. À titre d'exemple, le terme « caractéristiques techniques unitaires » peut désigner un composant spécifique d'un dispositif mécanique décrit dans une revendication, une étape particulière d'un procédé 100 chimique revendiqué, un paramètre technique précis d'un système électronique faisant l'objet d'une protection, ou encore une fonction spécifique d'un logiciel qui est revendiquée dans le brevet. Par exemple, dans un brevet sur un smartphone, une caractéristique technique unitaire pourrait être « un capteur d'empreintes digitales intégré sous l'écran » ou « un processeur neural dédié au traitement d'images ».

Le terme « paragraphes élémentaires » désigne les unités textuelles de base qui sont extraites de la partie description du document brevet numérique. Ces paragraphes constituent les plus petites unités cohérentes de texte qui contiennent des informations techniques pertinentes sur l'invention. Dans l'invention, ces paragraphes élémentaires sont identifiés et isolés lors de l'étape d'extraction pour une analyse ultérieure. À titre d'exemple, le terme « paragraphes élémentaires » peut se référer à un paragraphe décrivant le fonctionnement d'un composant spécifique de l'invention, un passage expliquant une étape particulière d'un procédé 100 breveté, un paragraphe détaillant les avantages techniques d'une caractéristique de l'invention, ou encore une section décrivant une variante ou une application spécifique de l'invention.

### - Génération d'un graphe de données représentant les relations sémantiques entre les CTU et les PE

L'étape de génération 130 du graphe de données GD implique la création de noeuds N1 représentant les caractéristiques techniques unitaires CTU et de noeuds N2 représentant les paragraphes élémentaires PE.

Le terme « graphe de données » fait référence à une structure de représentation visuelle des informations extraites du document brevet numérique. Ce graphe est composé de noeuds et d'arêtes qui illustrent les relations entre les différents éléments du document brevet numérique. Dans le contexte de cette invention, le graphe de données est généré pour représenter les liens entre les caractéristiques techniques unitaires et les paragraphes élémentaires. À titre d'exemple, le terme « graphe de données » peut désigner une représentation où chaque caractéristique technique est un noeud relié par des arêtes aux paragraphes qui la décrivent, un réseau montrant les relations hiérarchiques entre les différentes caractéristiques techniques de l'invention, un graphe illustrant la distribution des caractéristiques techniques à travers les sections de la description, ou encore une structure visuelle mettant en évidence les connexions sémantiques entre différents aspects de l'invention. Parmi les modèles de graphes de données couramment utilisés, on peut citer les graphes RDF (Resource Description Framework) basés sur des triplets <sujet, prédicat, objet> où chaque élément est identifié par un URI, et les graphes de propriétés (Property Graphs) dans lesquels les noeuds et les arêtes peuvent être enrichis d'attributs. Ces deux types de graphes permettent de représenter efficacement les relations sémantiques entre les entités d'un domaine.

De plus, le graphe de données GD comprend des arêtes orientées A reliant les noeuds N1 et N2.

À titre d'exemple, une arête orientée peut désigner un lien dirigé partant d'un noeud N1 associé à une caractéristique technique unitaire CTU spécifique et pointant vers un noeud N2 correspondant à un paragraphe élémentaire PE qui décrit en détail cette caractéristique technique unitaire CTU. Il peut également s'agir d'une connexion orientée reliant un noeud N2 représentant un paragraphe élémentaire PE contenant une illustration à un noeud N1 associé à la caractéristique technique unitaire CTU que cette illustration met en évidence. Les arêtes orientées A peuvent aussi servir à représenter des relations hiérarchiques ou de dépendance entre différentes caractéristiques techniques unitaires CTU mentionnées dans des paragraphes élémentaires PE distincts, mais liés sur le plan sémantique.

En pratique, les arêtes A représentent des relations sémantiques entre les caractéristiques techniques unitaires CTU et les paragraphes élémentaires PE.

Le terme « relations sémantiques » désigne les liens de sens qui existent entre différents éléments du document brevet numérique. Ces relations reflètent la manière dont les concepts et les idées sont connectés et interdépendants dans le contexte de l'invention décrite. Dans l'invention, les relations sémantiques sont représentées par les arêtes orientées du graphe de données, reliant les caractéristiques techniques unitaires aux paragraphes élémentaires. À titre d'exemple, le terme « relations sémantiques » peut inclure le lien entre une caractéristique technique spécifique et le paragraphe qui l'explique en détail, la connexion entre deux caractéristiques techniques qui fonctionnent ensemble dans l'invention, la relation entre une caractéristique générale et ses variantes décrites dans différents paragraphes, ou encore le lien entre un concept technique et ses applications pratiques mentionnées dans la description.

Par la suite, le procédé 100 calcule 140 pour chaque arête A du graphe de données GD un score de similarité sémantique S entre la caractéristique technique unitaire CTU et le paragraphe élémentaire PE reliés par l'arête A.

Le terme « score de similarité sémantique » fait référence à une valeur numérique qui quantifie le degré de ressemblance ou de pertinence sémantique entre deux éléments du document brevet numérique. Dans le contexte de cette invention, ce score est calculé pour chaque arête du graphe de données, mesurant la similarité entre une caractéristique technique unitaire et un paragraphe élémentaire. À titre d'exemple, le terme « score de similarité sémantique » peut désigner une valeur élevée indiquant une forte correspondance entre une caractéristique technique et un paragraphe qui la décrit en détail, un score moyen reflétant une relation partielle entre une caractéristique et un paragraphe qui la mentionne brièvement, un score faible pour une caractéristique technique et un paragraphe qui traitent de sujets différents, mais liés, ou encore un score nul entre des éléments sans relation sémantique apparente. Plus concrètement, en utilisant une mesure de similarité cosinus, un score de 0.79 pourrait être attribué entre une caractéristique technique unitaire «Accompagnement des travaux de construction » et un paragraphe élémentaire traitant de la « Supervision de la construction », indiquant une forte similarité sémantique entre ces deux éléments. Par exemple, dans un brevet sur un système de construction automatisé, un score de similarité de 0.95 pourrait être attribué entre la caractéristique technique « bras robotique articulé » et un paragraphe décrivant en détail le fonctionnement et les spécifications de ce bras robotique.

Ensuite, le procédé 100 génère 150 le vecteur de caractéristiques stylométriques VCS.

Le terme « vecteur de caractéristiques stylométriques » désigne un ensemble ordonné de valeurs numériques qui capture les aspects stylistiques et structurels du document brevet numérique. Ce vecteur représente de manière quantitative les caractéristiques de style et de structure identifiées lors de l'analyse stylométrique. À titre d'exemple, le terme «vecteur de caractéristiques stylométriques » peut comprendre des valeurs représentant la fréquence d'apparition de certaines caractéristiques techniques dans différentes sections du document brevet numérique, des scores moyens de similarité sémantique entre les caractéristiques techniques et les paragraphes associés, des indicateurs de la complexité structurelle de la description, ou encore des mesures de la cohérence entre les revendications et la description.

En pratique, le vecteur de caractéristiques stylométriques VCS peut intégrer une distribution spatiale des caractéristiques techniques unitaires CTU dans la description D.

Le terme « distribution spatiale » fait référence à la manière dont les caractéristiques techniques unitaires sont réparties et organisées à travers la description du document brevet numérique. Cette distribution reflète la structure et l'organisation de l'information technique dans le document. À titre d'exemple, le terme « distribution spatiale » peut désigner la concentration de certaines caractéristiques techniques dans des sections spécifiques de la description, la progression de l'introduction de nouvelles caractéristiques techniques au fil du document brevet numérique, la répartition équilibrée ou déséquilibrée des caractéristiques techniques entre différentes parties de la description, ou encore la fréquence d'apparition de certaines caractéristiques techniques dans des paragraphes consécutifs ou distants. Par exemple, dans un brevet sur un véhicule électrique, la distribution spatiale pourrait montrer une concentration élevée de caractéristiques techniques liées à la batterie dans la première moitié de la description, suivie d'une concentration de caractéristiques liées au système de propulsion dans la seconde moitié.

De plus, le vecteur de caractéristiques stylométriques VCS peut inclure les scores de similarité sémantique S entre chaque caractéristique technique unitaire CTU et les paragraphes élémentaires PE associés.

Enfin, le vecteur de caractéristiques stylométriques VCS peut comprendre un indicateur de densité des caractéristiques techniques unitaires CTU par paragraphe élémentaire PE.

Le terme « indicateur de densité » désigne une mesure quantitative qui reflète la concentration des caractéristiques techniques unitaires dans les paragraphes élémentaires de la description. Cet indicateur fournit des informations sur l'intensité de l'information technique présente dans différentes parties du document brevet numérique. À titre d'exemple, le terme « indicateur de densité » peut se référer à un nombre moyen de caractéristiques techniques par paragraphe dans l'ensemble de la description, une valeur élevée indiquant une section particulièrement riche en détails techniques, un indicateur faible pour des paragraphes contenant principalement des informations contextuelles, ou encore une mesure de la variation de la densité technique entre différentes sections de la description.

La dernière étape du procédé 100 consiste en l'analyse 160 de la topologie du graphe de données GD et du vecteur de caractéristiques stylométriques VCS.

Le terme « topologie du graphe de données » fait référence à la structure et à l'organisation des connexions entre les noeuds dans le graphe de données généré à partir du document brevet numérique. Cette topologie reflète les relations complexes entre les différents éléments techniques du brevet. À titre d'exemple, le terme « topologie du graphe de données » peut inclure l'identification de groupes fortement connectés de caractéristiques techniques et de paragraphes, la détection de caractéristiques techniques centrales qui sont liées à de nombreux paragraphes, l'analyse des chemins de connexion entre différentes parties de l'invention, ou encore l'évaluation de la complexité globale des relations entre les éléments techniques du brevet.

Cette analyse 160 est réalisée par un modèle d'apprentissage machine entraîné.

Le terme « modèle d'apprentissage machine » désigne un système informatique qui utilise des algorithmes pour apprendre à partir de données et à effectuer des tâches sans être explicitement programmé pour chaque cas spécifique. À titre d'exemple, le terme « modèle d'apprentissage machine » peut se référer à un réseau de neurones artificiels entraîné pour reconnaître des patterns structurels dans les documents brevets, un algorithme de classification qui catégorise les brevets selon leur style de rédaction, un système d'analyse prédictive qui identifie les caractéristiques structurelles importantes d'un brevet, ou encore un modèle de traitement du langage naturel spécialisé dans l'analyse des documents techniques comme les brevets. Plus concrètement, on pourrait utiliser un modèle BERT (Bidirectional Encoder Représentations from Transformers) pré-entraîné sur un large corpus de brevets, puis affiné pour la tâche spécifique d'analyse de structure des brevets. Ce modèle pourrait être capable d'identifier automatiquement les sections clés d'un brevet, de classifier les revendications selon leur type (indépendantes ou dépendantes), et de générer des résumés concis des aspects techniques principaux de l'invention.

Plus précisément, le modèle détermine au moins un indicateur de structure IS du document brevet numérique ainsi qu'un style de répartition des caractéristiques techniques unitaires CTU dans la description D.

Le terme « indicateur de structure » désigne une mesure ou un ensemble de mesures qui caractérisent l'organisation et la composition du document brevet numérique. Ces indicateurs fournissent des informations quantitatives sur la manière dont le contenu technique est structuré et présenté dans le document. Dans le contexte de cette invention, ces indicateurs sont déterminés par le modèle d'apprentissage machine à partir de l'analyse du graphe de données et du vecteur de caractéristiques stylométriques. À titre d'exemple, le terme « indicateur de structure » peut inclure une mesure de la cohérence entre les revendications et la description, un indice de la complexité de l'arborescence des caractéristiques techniques, une évaluation de la répartition équilibrée des informations techniques à travers le document, ou encore un score reflétant la clarté et la précision de la présentation des concepts techniques dans le brevet. Par exemple, un indicateur de structure pourrait être un « score de cohérence revendications-description » allant de 0 à 1, où 1 indique une parfaite correspondance entre les éléments techniques mentionnés dans les revendications et leur description détaillée dans le corps du brevet. Un autre indicateur pourrait être un « indice de complexité technique » basé sur le nombre de niveaux hiérarchiques dans l'arborescence des caractéristiques techniques, avec des valeurs typiques allant de 1 (structure simple) à 5 (structure très complexe).

Le terme « style de répartition » fait référence à la manière caractéristique dont les caractéristiques techniques unitaires sont distribuées et organisées au sein de la description du document brevet numérique. Ce style reflète l'approche adoptée par l'auteur du brevet pour présenter et structurer l'information technique. Dans l'invention, le style de répartition est déterminé par le modèle d'apprentissage machine en analysant la topologie du graphe de données et le vecteur de caractéristiques stylométriques. À titre d'exemple, le terme « style de répartition » peut désigner une approche progressive qui introduit les caractéristiques techniques de manière séquentielle et hiérarchique, un style concentré qui regroupe les caractéristiques techniques principales dans des sections spécifiques, une méthode dispersée qui répartit les informations techniques de manière uniforme à travers le document, ou encore un style modulaire qui présente les caractéristiques techniques par sous-systèmes ou composants de l'invention. Un exemple concret de style de répartition pourrait être le « style en entonnoir», couramment utilisé dans les brevets de biotechnologie, où l'on commence par une description large du domaine technique, puis on se concentre progressivement sur des aspects de plus en plus spécifiques de l'invention. Un autre exemple serait le « style en modules interconnectés », souvent employé dans les brevets de systèmes informatiques complexes, où chaque module fonctionnel est décrit en détail, suivi d'une explication de leurs interactions.

Dans une mise en oeuvre particulière de l'analyse 160, celle-ci comporte une étape supplémentaire d'identification 161 des relations de dépendance entre les revendications du document brevet numérique.

Le terme « relations de dépendance entre les revendications » fait référence aux liens hiérarchiques ou de subordination qui existent entre les différentes revendications d'un document brevet numérique. Ces relations définissent comment certaines revendications, appelées revendications dépendantes, se rapportent à et limitent la portée d'autres revendications, appelées revendications indépendantes. L'identification de ces relations est essentielle pour comprendre la structure et l'interdépendance des éléments revendiqués dans le brevet. À titre d'exemple, le terme « relations de dépendance entre les revendications » peut désigner une revendication dépendante qui ajoute une limitation technique spécifique à une revendication indépendante plus large, une chaîne de revendications dépendantes qui se réfèrent successivement les unes aux autres pour définir une variante particulière de l'invention, un arbre hiérarchique montrant comment les revendications dépendantes se ramifient à partir des revendications indépendantes, ou encore un graphe de dépendance identifiant les groupes de revendications interdépendantes. Dans un brevet sur un procédé de fabrication de semi-conducteurs, les relations de dépendance entre les revendications pourraient inclure une revendication indépendante décrivant les étapes générales du procédé, suivie de plusieurs revendications dépendantes précisant les conditions de température, les matériaux utilisés ou les paramètres de contrôle pour chaque étape. Un exemple de chaîne de dépendance serait : Revendication 1 (indépendante) -> Revendication 2 (dépendante de 1) -> Revendication 3 (dépendante de 2) -> Revendication 4 (dépendante de 3), chaque revendication ajoutant un niveau supplémentaire de détail technique.

### Premier mode de réalisation du premier aspect de l'invention : enrichissement du graphe de données par l'attribution d'étiquettes sémantiques hiérarchisées et d'indicateurs structurels

Dans un premier mode de réalisation du premier aspect de l'invention, l'étape de génération 150 du graphe de données GD comporte plusieurs étapes complémentaires qui enrichissent la structure initiale du graphe.

En pratique, une étape d'attribution 151 affecte à chaque arête A une pluralité d'étiquettes sémantiques hiérarchisées.

Le terme « étiquettes sémantiques hiérarchisées » désigne un système structuré d'annotations qui sont attribuées aux arêtes du graphe de données GD. Ces étiquettes organisent et catégorisent les relations sémantiques entre les caractéristiques techniques unitaires CTU et les paragraphes élémentaires PE selon une structure hiérarchique. Cette hiérarchisation permet de représenter les relations sémantiques à différents niveaux de granularité et de spécificité. À titre d'exemple, le terme « étiquettes sémantiques hiérarchisées » peut inclure une étiquette de niveau supérieur « Fonction » avec des sous-étiquettes telles que « Fonction principale » et « Fonction secondaire », une hiérarchie d'étiquettes allant de « Composant » à « Sous-composant » puis à « Élément spécifique », ou encore un système d'étiquettes qui commence par « Processus » et se décline en « Étape », « Sous-étape » et « Action spécifique ». Dans un brevet sur un smartphone, on pourrait avoir une hiérarchie d'étiquettes comme suit : « Interface utilisateur » (niveau supérieur) > « Écran tactile » (niveau intermédiaire) > « Capteur capacitif » (niveau spécifique). Pour un brevet sur un procédé de fabrication, on pourrait avoir : « Processus de production » > « Étape de moulage » > « Injection de polymère ».

Plus précisément, ces étiquettes représentent un type principal de relation sémantique entre la caractéristique technique unitaire CTU et le paragraphe élémentaire PE.

Le terme «type principal de relation sémantique » fait référence à la catégorie fondamentale qui caractérise la nature de la connexion entre une caractéristique technique unitaire CTU et un paragraphe élémentaire PE dans le graphe de données GD. Ce type principal constitue le niveau le plus élevé dans la hiérarchie des étiquettes sémantiques et définit le cadre général de la relation. À titre d'exemple, le terme « type principal de relation sémantique » peut désigner une relation de « Description » qui indique que le paragraphe décrit en détail la caractéristique technique, une relation « Fonctionnelle » qui montre que le paragraphe explique le rôle ou l'utilité de la caractéristique, une relation « Structurelle » qui signifie que le paragraphe détaille la composition ou l'agencement de la caractéristique, ou encore une relation « Contextuelle » qui indique que le paragraphe fournit des informations sur l'environnement ou les conditions d'utilisation de la caractéristique. Par exemple, dans un brevet sur un nouveau type de batterie pour véhicule électrique, une relation « Description » pourrait lier une caractéristique technique unitaire « électrode en nanotubes de carbone » à un paragraphe détaillant sa structure moléculaire. Une relation « Fonctionnelle » pourrait connecter cette même caractéristique à un paragraphe expliquant comment elle améliore la densité énergétique de la batterie. Une relation « Contextuelle » pourrait lier cette caractéristique à un paragraphe discutant des conditions de température optimales pour son fonctionnement.

En outre, les étiquettes peuvent inclure des sous-types de relations sémantiques caractérisant des aspects spécifiques de la relation principale ainsi que des relations de dépendance entre les différents types de relations sémantiques.

Le terme « aspects spécifiques de la relation principale » se rapporte aux sous-catégories ou aux détails particuliers qui précisent et affinent le type principal de relation sémantique entre une caractéristique technique unitaire CTU et un paragraphe élémentaire PE. Ces aspects spécifiques fournissent une granularité plus fine dans la description de la relation sémantique et permettent une caractérisation plus précise de la nature de la connexion. À titre d'exemple, le terme « aspects spécifiques de la relation principale » peut comprendre, pour une relation principale de type « Description », des sous-aspects tels que « Description physique », « Description fonctionnelle » ou « Description comparative », pour une relation principale « Fonctionnelle », des aspects spécifiques comme « Fonction primaire », « Fonction secondaire » ou « Fonction optionnelle », ou encore, pour une relation principale « Structurelle », des aspects tels que « Composition matérielle », « Agencement spatial » ou « Interconnexion avec d'autres éléments ». Dans le cas d'un brevet sur un nouveau processeur pour l'intelligence artificielle, une relation principale « Description » pourrait avoir des aspects spécifiques tels que « Description architecturale » (détaillant la structure des unités de calcul), « Description performative » (expliquant les gains en vitesse de traitement) et « Description comparative » (comparant avec les processeurs existants). Pour une relation principale « Fonctionnelle », on pourrait avoir des aspects spécifiques comme « Fonction d'apprentissage profond », « Fonction d'inférence en temps réel » et « Fonction d'optimisation énergétique ».

Le terme « relations de dépendance » désigne les liens hiérarchiques ou logiques qui existent entre les différents types et sous-types de relations sémantiques dans le système d'étiquettes du graphe de données GD. Ces relations de dépendance établissent une structure organisationnelle qui reflète les interconnexions et les influences mutuelles entre les diverses catégories de relations sémantiques. À titre d'exemple, le terme « relations de dépendance » peut inclure une dépendance hiérarchique où une relation de type « Composant » englobe et influence des relations de type « Sous-composant », une dépendance logique où une relation « Fonctionnelle » implique nécessairement une relation « Structurelle » associée, une dépendance conditionnelle où l'existence d'une relation « Optimisation » dépend de la présence préalable d'une relation « Problème technique », ou encore une dépendance séquentielle où une relation « Résultats suit logiquement une relation « Processus ».

Par ailleurs, le procédé 100 enrichit 152 chaque arête A avec des attributs spécifiques. Ces attributs peuvent comprendre des scores quantifiant la force de la relation sémantique, à savoir, de valeurs numériques qui sont attribuées à chaque arête du graphe de données GD pour mesurer l'intensité ou la pertinence de la connexion sémantique entre une caractéristique technique unitaire CTU et un paragraphe élémentaire PE. Ces scores fournissent une évaluation quantitative de l'importance ou de la significativité de chaque relation sémantique identifiée. À titre d'exemple, le terme « scores quantifiant la force de la relation sémantique » peut désigner un score élevé indiquant une correspondance forte et directe entre une caractéristique technique et un paragraphe qui la décrit en détail, un score moyen reflétant une relation partielle ou indirecte entre une caractéristique et un paragraphe qui la mentionne brièvement, un score faible pour une relation sémantique ténue ou périphérique, ou encore un système de scores multidimensionnels qui évalue séparément la force de différents aspects de la relation sémantique (par exemple, pertinence, spécificité, et exhaustivité).

Ces attributs peuvent également comprendre des métriques de cohérence contextuelle, à savoir, des mesures quantitatives qui évaluent la pertinence et la consistance d'une relation sémantique entre une caractéristique technique unitaire CTU et un paragraphe élémentaire PE dans le contexte global du document brevet numérique. Ces métriques analysent comment chaque relation s'intègre et s'aligne avec l'ensemble des informations présentées dans le brevet. À titre d'exemple, le terme « métriques de cohérence contextuelle » peut inclure un indice de cohérence thématique qui mesure l'alignement d'une relation avec le sujet principal du brevet, un score de continuité qui évalue la fluidité de la transition entre différentes relations sémantiques dans le document, une mesure de consistance terminologique qui quantifie l'uniformité de l'utilisation des termes techniques à travers différentes relations, ou encore un indicateur de pertinence contextuelle qui évalue la contribution d'une relation spécifique à la compréhension globale de l'invention. Par exemple, dans un brevet sur un système de freinage automobile, une métrique de cohérence contextuelle pourrait être un « score de cohérence fonctionnelle » allant de 0 à 1, où 1 indique une parfaite cohérence entre la description d'un composant spécifique (comme un capteur de pression) et son rôle dans le système global de freinage. Un autre exemple pourrait être un « indice de continuité technologique » qui mesure la cohérence des relations sémantiques entre les différentes générations de la technologie de freinage présentées dans le brevet, avec des valeurs typiques allant de -1 (discontinuité totale) à +1 (continuité parfaite).

Ces attributs peuvent également comprendre des indicateurs de spécificité technique, à savoir, des mesures qui quantifient le degré de précision et de détail technique dans la relation entre une caractéristique technique unitaire CTU et un paragraphe élémentaire PE. Ces indicateurs évaluent la profondeur et la granularité des informations techniques fournies dans le cadre de chaque relation sémantique. À titre d'exemple, le terme « indicateurs de spécificité technique » peut désigner un score de détail technique qui mesure la précision des informations fournies sur une caractéristique spécifique, un indice de complexité qui évalue le niveau de sophistication technique de la relation décrite, une mesure de singularité qui quantifie le caractère unique ou innovant de l'information technique présentée, ou encore un indicateur de granularité qui évalue le niveau de décomposition ou de détail dans la description d'un aspect technique particulier. Dans le contexte d'un brevet sur un nouveau type de processeur quantique, un indicateur de spécificité technique pourrait être un « score de précision quantique » allant de 1 à 10, où 10 représente une description extrêmement détaillée et précise des mécanismes quantiques impliqués dans le fonctionnement du processeur. Un autre exemple pourrait être un « indice de nouveauté technique » qui évalue le degré d'innovation de chaque caractéristique technique par rapport à l'état de l'art, avec des valeurs allant de 0 (technique connue) à 5 (innovation radicale).

Enfin, le procédé 100 génère 153 des indicateurs structurels, à savoir, un ensemble de mesures et de paramètres qui caractérisent l'organisation et la répartition des informations techniques dans le document brevet numérique. Ces indicateurs fournissent une vue d'ensemble de la structure du document et de la manière dont les caractéristiques techniques unitaires CTU sont présentées et reliées tout au long de la description. À titre d'exemple, le terme « indicateurs structurels » peut comprendre une mesure de la distribution spatiale des caractéristiques techniques à travers les différentes sections du brevet, un indice de densité technique qui quantifie la concentration d'informations techniques dans chaque partie du document, un indicateur de progression qui évalue comment les concepts techniques sont introduits et développés au fil du texte, ou encore une métrique de connectivité qui mesure le degré d'interconnexion entre différentes caractéristiques techniques dans l'ensemble du document. Par exemple, dans un brevet sur un système d'intelligence artificielle pour la conduite autonome, un indicateur structurel pourrait être un « indice de progression technologique » qui mesure comment les concepts sont introduits, de la perception de l'environnement (caméras, lidars) jusqu'à la prise de décision complexe, avec des valeurs de 0 (introduction désordonnée) à 1 (progression logique et claire). Un autre exemple pourrait être une « carte de densité technique » qui visualise la concentration d'informations techniques dans chaque section du brevet, utilisant une échelle de couleurs allant du bleu (faible densité) au rouge (haute densité).

En pratique, les indicateurs structurels peuvent comprendre la distribution spatiale des caractéristiques techniques unitaires CTU dans la description.

De plus, ces indicateurs peuvent également comprendre une matrice de co-occurrence des types de relations.

Le terme « matrice de co-occurrence des types de relations » fait référence à une représentation tabulaire qui capture la fréquence et les patterns d'apparition conjointe des différents types de relations sémantiques dans le graphe de données GD. Cette matrice fournit une vue synthétique des associations entre les différentes catégories de relations sémantiques identifiées dans le document brevet numérique. À titre d'exemple, le terme « matrice de co-occurrence des types de relations » peut inclure une table montrant la fréquence à laquelle une relation de type « Fonction » apparaît en conjonction avec une relation de type « Structure », une représentation visuelle des patterns de co-occurrence entre les relations « Problème technique » et « Solution proposée », une analyse quantitative de l'association entre les relations « Composant » et « Processus de fabrication », ou encore une matrice complexe qui capture les interactions multiples entre plusieurs types de relations sémantiques à travers l'ensemble du document brevet numérique.

Par ailleurs, ces indicateurs peuvent également comprendre des métriques de densité pondérées par la pertinence technique des relations.

Le terme « métriques de densité pondérées par la pertinence technique des relations » désigne des mesures qui évaluent la concentration des informations techniques dans le document brevet numérique, en tenant compte non seulement de la quantité de relations sémantiques, mais aussi de leur importance et de leur pertinence technique. Ces métriques combinent des aspects quantitatifs et qualitatifs pour fournir une évaluation plus nuancée de la richesse technique du document. À titre d'exemple, le terme « métriques de densité pondérées par la pertinence technique des relations » peut comprendre un score de densité technique qui attribue un poids plus élevé aux relations sémantiques jugées importantes pour l'invention, un indice de concentration d'innovation qui met l'accent sur les relations décrivant des aspects novateurs ou non évidents, une mesure de densité fonctionnelle qui pondère les relations en fonction de leur importance dans la description du fonctionnement de l'invention, ou encore un indicateur de densité contextuelle qui ajuste la pondération des relations en fonction de leur pertinence par rapport au domaine technique spécifique du brevet.

De plus, ces indicateurs peuvent également comprendre des métriques évaluant la connectivité entre les revendications.

Le terme « métriques de connectivité inter-revendications » fait référence à des mesures quantitatives qui évaluent le degré et les patterns de connexion entre les différentes revendications d'un document brevet numérique. Ces métriques analysent comment les revendications sont liées les unes aux autres, soit directement par des références explicites, soit indirectement par le partage de concepts techniques communs. À titre d'exemple, le terme « métriques de connectivité inter-revendications » peut inclure un score de densité des références entre revendications, un indice de chevauchement technique qui mesure la proportion de caractéristiques techniques partagées entre différentes revendications, une mesure de la distance sémantique moyenne entre les revendications, ou encore une analyse des clusters de revendications fortement interconnectées. Dans un brevet sur un système de communication sans fil, une métrique de connectivité inter-revendications pourrait être un « score de dépendance hiérarchique » qui quantifie le nombre moyen de revendications dépendantes par revendication indépendante, avec des valeurs typiques allant de 0 (toutes les revendications sont indépendantes) à 10 ou plus (forte interdépendance des revendications). Un autre exemple serait un « indice de cohésion technique » qui mesure le pourcentage de caractéristiques techniques communes à toutes les revendications, allant de 0 % (aucun recoupement) à 100 % (toutes les revendications partagent les mêmes caractéristiques clés).

En outre, ces indicateurs peuvent également comprendre des indicateurs de liaison revendications-description.

Le terme « indicateurs de liaison revendications-description » désigne un ensemble de mesures qui quantifient la force et la nature des connexions entre les revendications et la description d'un document brevet numérique. Ces indicateurs évaluent dans quelle mesure les revendications sont étayées et expliquées par le contenu de la description. À titre d'exemple, le terme « indicateurs de liaison revendications-description » peut inclure un score de couverture qui mesure la proportion des caractéristiques techniques des revendications qui sont détaillées dans la description, un indice de support qui évalue le niveau de détail et d'explication fourni dans la description pour chaque élément des revendications, une mesure de la cohérence terminologique entre les revendications et la description, ou encore une analyse de la distribution des références aux revendications dans les différentes sections de la description. Par exemple, dans un brevet pharmaceutique, un indicateur de liaison revendications-description pourrait être un « score d'étayage expérimental » qui évalue, sur une échelle de 1 à 5, dans quelle mesure les exemples expérimentaux de la description valident les effets revendiqués pour un composé, avec 1 indiquant une faible corrélation et 5 une confirmation solide des allégations des revendications. Un autre exemple serait un « indice de consistance terminologique » qui calcule le pourcentage de termes techniques des revendications qui sont définis ou utilisés de manière cohérente dans la description, avec des valeurs allant de 0 % (inconsistance totale) à 100 % (parfaite consistance).

### Deuxième mode de réalisation du premier aspect de l'invention : méthode de calcul du score de similarité sémantique par analyse tensorielle multi-niveau adaptative au contexte des brevets

Dans un deuxième mode de réalisation du premier aspect de l'invention, l'étape de calcul 140 du score de similarité sémantique S pour chaque arête A met en oeuvre une méthodologie complexe d'analyse et de combinaison de mesures.

En pratique, le procédé 100 applique une analyse tensorielle multi-niveau qui intègre plusieurs types de mesures.

Le terme « analyse tensorielle multi-niveau » désigne une méthode mathématique avancée qui permet de traiter et de combiner des données multidimensionnelles structurées. Dans le contexte de l'invention, cette analyse est utilisée pour intégrer différents types de mesures (lexicales, syntaxiques, sémantiques) afin de calculer un score de similarité sémantique entre les caractéristiques techniques et les paragraphes de la description. À titre d'exemple, le terme « analyse tensorielle multi-niveau » peut faire référence à l'utilisation de tenseurs d'ordre 3 ou plus pour représenter les relations entre les mots, les structures syntaxiques et les concepts sémantiques, à l'application d'opérations tensorielles comme la décomposition en valeurs singulières pour extraire des caractéristiques pertinentes, à l'emploi de techniques de réduction de dimensionnalité tensorielle pour fusionner efficacement les différentes mesures, ou encore à la mise en oeuvre d'algorithmes d'apprentissage profond tensoriel pour capturer les interactions complexes entre les niveaux d'analyse. Plus concrètement, dans un brevet sur un système de reconnaissance de la parole, une analyse tensorielle multi-niveau pourrait impliquer la construction d'un tenseur d'ordre 3 avec les dimensions (mots, traits phonétiques, contexte sémantique), suivie d'une décomposition de Tucker pour identifier les facteurs latents capturant les relations entre ces différents niveaux linguistiques. Les vecteurs résultants pourraient ensuite être utilisés pour calculer des scores de similarité sémantique entre les phrases de la description et les caractéristiques techniques du système de reconnaissance vocale mentionnées dans les revendications.

Tout d'abord, cette analyse peut inclure une mesure d'analyse lexicale utilisant des embeddings spécifiques aux brevets.

Le terme « mesure d'analyse lexicale utilisant des embeddings spécifiques aux brevets » fait référence à une approche quantitative qui évalue la similarité sémantique entre des mots ou des expressions en se basant sur leur représentation vectorielle dans un espace sémantique dédié aux brevets. Les embeddings sont des techniques d'apprentissage automatique qui permettent de projeter chaque mot dans un espace vectoriel dense de manière à ce que les mots sémantiquement proches soient représentés par des vecteurs similaires. À titre d'exemple, le terme « mesure d'analyse lexicale utilisant des embeddings spécifiques aux brevets » peut désigner l'utilisation d'un modèle de type word2vec ou GloVe entraîné spécifiquement sur un large corpus de brevets pour capturer les relations sémantiques propres à ce domaine, le calcul de la similarité cosinus entre les vecteurs de mots pour quantifier leur proximité sémantique, la prise en compte de la spécificité et de la technicité du vocabulaire spécifique aux brevets dans la construction des représentations vectorielles, ou encore l'adaptation des embeddings à des sous-domaines techniques particuliers pour une analyse lexicale plus fine et pertinente. Par exemple, dans le domaine des brevets pharmaceutiques, on pourrait entraîner un modèle d'embeddings FastText sur un corpus de brevets décrivant des composés chimiques et leurs propriétés. Les vecteurs de mots résultants captureraient alors les relations sémantiques spécifiques à ce domaine, comme la similarité entre différentes classes de médicaments ou la proximité entre une molécule et ses cibles thérapeutiques. Ces embeddings pourraient ensuite être utilisés pour calculer des scores de similarité lexicale entre les termes techniques des revendications et ceux de la description du brevet.

Ensuite, l'analyse peut également comprendre une mesure d'analyse syntaxique basée sur des graphes de dépendance.

Le terme « mesure d'analyse syntaxique basée sur des graphes de dépendance » désigne une approche qui évalue la similarité structurelle entre des phrases ou des syntagmes en représentant leurs relations grammaticales sous forme de graphes. Un graphe de dépendance est une structure de données qui modélise les connexions syntaxiques entre les mots d'une phrase, où chaque noeud correspond à un mot et chaque arête orientée indique une relation de dépendance (par exemple, sujet, objet, modificateur). À titre d'exemple, le terme « mesure d'analyse syntaxique basée sur des graphes de dépendances peut faire référence à l'utilisation d'algorithmes de parsing syntaxique comme les grammaires de dépendance pour générer automatiquement les graphes, au calcul de mesures de similarité structurelle comme la distance d'édition entre graphes pour quantifier leur ressemblance, à la prise en compte de la nature et de la direction des relations de dépendance pour une analyse syntaxique fine, ou encore à l'extraction de sous-graphes communs ou de motifs récurrents pour identifier des structures syntaxiques partagées entre les phrases. Dans le cas d'un brevet décrivant un procédé de fabrication, on pourrait construire des graphes de dépendance pour les phrases clés des revendications et de la description. La comparaison de ces graphes, par exemple en calculant leur plus grand sous-graphe commun, permettrait de quantifier la similarité syntaxique entre les étapes revendiquées et leur description détaillée. Des mesures comme la distance d'édition de graphes pourraient également être utilisées pour évaluer la cohérence structurelle entre différentes parties de la description du procédé.

Enfin, l'analyse peut également intégrer une mesure d'analyse sémantique contextuelle par domaine technique.

Le terme « mesure d'analyse sémantique contextuelle par domaine technique » fait référence à une approche qui évalue la similarité de sens entre des unités textuelles en tenant compte du contexte spécifique lié au domaine technique du brevet. Cette mesure vise à capturer les nuances sémantiques et les relations conceptuelles propres au domaine de spécialité, en s'appuyant sur des ressources et des modèles de connaissances adaptés. À titre d'exemple, le terme « mesure d'analyse sémantique contextuelle par domaine technique » peut désigner l'utilisation d'ontologies ou de taxonomies spécialisées pour modéliser les concepts et les relations propres au domaine, l'exploitation de bases de connaissances techniques pour enrichir l'interprétation sémantique des termes, le recours à des méthodes de désambiguïsation sémantique basées sur le contexte pour lever les ambiguïtés liées à la polysémie, ou encore l'adaptation des modèles de représentation sémantique à la terminologie et aux spécificités conceptuelles du domaine visé. Par exemple, pour un brevet dans le domaine de l'énergie solaire, on pourrait utiliser une ontologie spécifique décrivant les concepts clés tels que les types de cellules photovoltaïques, les méthodes de fabrication, et les paramètres de performance. En mappant les termes du brevet à cette ontologie et en exploitant les relations sémantiques qui y sont définies, on pourrait calculer des scores de similarité sémantique contextualisés entre les revendications et la description. Des techniques de désambiguïsation basées sur le contexte permettraient de distinguer les différents sens d'un terme polysémique comme « couche » (layer), qui pourrait faire référence à une couche de semi-conducteur dans une cellule solaire ou à une couche de revêtement protecteur.

Puis, le procédé 100 effectue une combinaison adaptative des différentes mesures d'analyse, en agrégeant de manière flexible et dynamique les résultats provenant de différents niveaux d'analyse (lexical, syntaxique, sémantique) pour obtenir une évaluation globale de la similarité. À titre d'exemple, le terme « combinaison adaptative des différentes mesures d'analyse » peut faire référence à l'utilisation de pondérations variables pour ajuster l'importance relative de chaque niveau d'analyse en fonction du domaine technique, à la mise en place de règles de combinaison conditionnelles basées sur la position hiérarchique des éléments (par exemple, privilégier l'analyse syntaxique pour les éléments de même niveau et l'analyse sémantique pour les éléments de niveaux différents), à l'apprentissage automatique de la fonction de combinaison optimale à partir de données d'entraînement annotées, ou encore à l'adaptation dynamique de la stratégie de combinaison en cours d'analyse pour tenir compte du contexte local.

En particulier, cette combinaison peut s'adapter au domaine technique du brevet, à savoir, le champ d'application spécifique couvert par l'invention décrite dans le brevet. Il s'agit du secteur technologique ou du domaine de spécialité auquel se rapportent les concepts, les méthodes et les objets techniques présentés. Le domaine technique conditionne le vocabulaire employé, les connaissances mobilisées et les enjeux spécifiques abordés dans le brevet. À titre d'exemple, le terme « domaine technique du brevet » peut désigner des champs aussi variés que la mécanique, l'électronique, la chimie, l'informatique ou encore les biotechnologies, avec des sous-domaines plus spécialisés comme la robotique, les télécommunications, les matériaux composites, l'intelligence artificielle ou l'ingénierie génétique. Le domaine technique influence la manière dont les éléments de l'invention sont décrits, les problèmes techniques abordés et les solutions proposées, ainsi que les implications et les applications potentielles de l'invention. Par exemple, dans le domaine des biotechnologies, un brevet pourrait porter sur une nouvelle méthode de séquençage de l'ADN. L'adaptation au domaine impliquerait alors de se concentrer sur les termes et concepts spécifiques à la génomique, comme les noms des différentes techniques de séquençage (Illumina, Nanopore...), les indicateurs de performance (taux d'erreur, longueur des reads...), ou encore les applications potentielles (diagnostic médical, études d'association pangénomique...). Les mesures de similarité sémantique seraient ainsi pondérées en fonction de la pertinence et de la spécificité des termes dans ce domaine particulier.

En outre, cette combinaison peut s'adapter à la position hiérarchique des caractéristiques techniques, à savoir, le niveau d'imbrication ou de subordination des différents éléments techniques dans la structure globale de l'invention. Cette position reflète l'organisation logique et les relations de dépendance entre les caractéristiques, des plus générales aux plus spécifiques. À titre d'exemple, le terme « position hiérarchique des caractéristiques techniques » peut faire référence à une structure arborescente où les caractéristiques de plus haut niveau englobent et subsument celles de niveaux inférieurs, à une organisation en modules fonctionnels où chaque module comporte des sous-caractéristiques détaillant son implémentation, à un agencement séquentiel où les caractéristiques sont ordonnées selon leur ordre d'intervention dans un processus ou un système, ou encore à une hiérarchie de spécificité où les caractéristiques sont raffinées et précisées à chaque niveau de profondeur. La position hiérarchique est prise en compte lors de la combinaison des mesures de similarité pour adapter le mode de comparaison en fonction des relations structurelles entre les éléments.

De plus, la combinaison prend en compte le contexte d'utilisation dans la description, à savoir, l'environnement textuel et fonctionnel dans lequel une caractéristique technique est mentionnée et détaillée au sein de la description du brevet. Ce contexte comprend à la fois les informations textuelles environnantes (phrases, paragraphes) qui précisent le rôle, le fonctionnement ou les interactions de la caractéristique, et le cadre fonctionnel plus large (section, étape, mode de réalisation) qui situe son utilisation dans l'invention globale. À titre d'exemple, le terme « contexte d'utilisation dans la description » peut désigner la présence d'une caractéristique dans une section dédiée à la description détaillée de l'invention, son intégration dans un mode de réalisation spécifique illustrant sa mise en oeuvre, son association à des conditions particulières de fonctionnement ou d'utilisation, ou encore son interaction avec d'autres éléments techniques au sein d'un processus ou d'un système complexe. La prise en compte du contexte d'utilisation permet d'affiner l'interprétation sémantique des caractéristiques techniques et d'adapter leur comparaison en fonction de leur rôle et de leur importance dans l'invention décrite. Dans un brevet décrivant un système de freinage ABS pour automobile, le contexte d'utilisation pourrait correspondre à la section détaillant le fonctionnement du système lors d'un freinage d'urgence sur route glissante. Les caractéristiques techniques mentionnées dans ce contexte, comme les capteurs de vitesse de roue ou l'unité de contrôle électronique, prendraient alors une importance particulière. Leur similarité sémantique avec les passages correspondants de la description serait pondérée en conséquence, reflétant leur rôle central dans le fonctionnement de l'invention dans cette situation spécifique.

### Troisième mode de réalisation du premier aspect de l'invention : composition et métriques du vecteur de caractéristiques stylométriques pour l'analyse de la structure des documents brevets

Dans un troisième mode de réalisation du premier aspect de l'invention, le vecteur de caractéristiques stylométriques VCS peut intégrer plusieurs catégories d'indicateurs et de métriques qui caractérisent la structure et le style du document brevet numérique.

Tout d'abord, le vecteur de caractéristiques stylométriques VCS peut inclure des métriques de structure hiérarchique, à savoir, un ensemble de mesures quantitatives qui analysent l'organisation et l'agencement des caractéristiques techniques unitaires CTU selon une structure hiérarchique dans le document brevet numérique. À titre d'exemple, le terme « métriques de structure hiérarchiques peut inclure un indice de profondeur hiérarchique qui mesure le nombre de niveaux de dépendance technique présents dans le document, un score de distribution des CTU qui quantifie l'équilibre de leur répartition entre les différents niveaux, une mesure de connectivité inter-niveaux qui évalue la force des relations entre CTU de niveaux hiérarchiques adjacents, ou encore un indicateur de cohérence hiérarchique qui vérifie l'absence de ruptures ou d'incohérences dans les chaînes de dépendance technique. Par exemple, dans un brevet sur un système de freinage électronique pour véhicules, un indice de profondeur hiérarchique de 4 pourrait indiquer une structure allant du système global (niveau 1) aux sous-systèmes principaux comme l'unité de contrôle électronique et les actionneurs hydrauliques (niveau 2), puis aux composants spécifiques comme les capteurs de vitesse de roue (niveau 3), et enfin aux éléments détaillés tels que les algorithmes de contrôle anti-blocage (niveau 4). Un score de distribution des CTU de 0,8 sur une échelle de 0 à 1 pourrait refléter une répartition équilibrée des caractéristiques techniques entre ces niveaux.

Dans un premier exemple, les métriques de structure hiérarchique analysent la répartition des caractéristiques techniques unitaires CTU par niveau de dépendance technique.

Le terme « répartition des caractéristiques techniques unitaires CTU par niveau de dépendance technique » fait référence à la distribution et à l'organisation des CTU selon une structure hiérarchique basée sur leurs relations de dépendance technique. Cette répartition reflète comment les CTU sont positionnées et agencées à différents niveaux de granularité et de spécificité technique dans le document brevet numérique. À titre d'exemple, le terme « répartition des caractéristiques techniques unitaires CTU par niveau de dépendance technique » peut désigner une organisation où les CTU de haut niveau représentent des aspects techniques généraux et englobent des CTU de niveaux inférieurs plus spécifiques, une distribution dans laquelle les CTU sont regroupées par modules fonctionnels à différents niveaux de détail, un agencement où les CTU sont réparties selon une hiérarchie allant des composants principaux aux sous-composants et aux éléments de base, ou encore une structure où les CTU sont organisées en fonction de leur rôle dans le processus inventif, des étapes clés aux actions élémentaires. Dans le cas d'un brevet sur un drone autonome, on pourrait avoir une répartition où le niveau 1 comprend les CTU générales comme « système de propulsion », « système de navigation » et « système de capture d'images ». Le niveau 2 pourrait détailler ces systèmes, par exemple « moteurs électriques brushless » et « hélices à pas variables pour le système de propulsion. Le niveau 3 pourrait inclure des CTU encore plus spécifiques comme « contrôleur de vitesse électronique pour moteur brushless » et « mécanisme d'ajustement du pas des hélices ».

Dans un deuxième exemple, les métriques de structure hiérarchique évaluent les relations entre caractéristiques techniques unitaires CTU de différents niveaux hiérarchiques.

Le terme « relations entre caractéristiques techniques unitaires CTU de différents niveaux hiérarchiques » désigne les liens et les dépendances qui existent entre les CTU positionnées à des niveaux distincts dans la structure hiérarchique du document brevet numérique. Ces relations reflètent comment les CTU de différents niveaux de granularité interagissent, se complètent ou se subordonnent les unes aux autres. À titre d'exemple, le terme « relations entre caractéristiques techniques unitaires CTU de différents niveaux hiérarchiques » peut inclure des relations de composition où une CTU de haut niveau est constituée de plusieurs CTU de niveaux inférieurs, des relations de spécialisation où une CTU générique est déclinée en variantes plus spécifiques à des niveaux subordonnés, des relations de dépendance fonctionnelle où une CTU de niveau supérieur repose sur le bon fonctionnement de CTU de niveaux inférieurs, ou encore des relations de séquence où des CTU de différents niveaux interviennent successivement dans un processus ou une méthode. Dans un brevet sur un système de traitement d'image par intelligence artificielle, on pourrait avoir une relation de composition entre la CTU de haut niveau « réseau neuronal convolutif » et les CTU de niveaux inférieurs telles que « couches de convolution », « couches de pooling » et « couches entièrement connectées ». Une relation de spécialisation pourrait exister entre la CTU générique « fonction d'activation » et ses variantes spécifiques comme « ReLU », « Sigmoid » ou « Tanh ». Une relation de dépendance fonctionnelle pourrait lier la CTU de haut niveau « classification d'objets » aux CTU de niveaux inférieurs « extraction de caractéristiques » et « calcul de scores de confiance ».

Dans un troisième exemple, les métriques de structure hiérarchique évaluent la cohérence des chaînes de dépendance technique.

Le terme « cohérence des chaînes de dépendance technique » fait référence à la qualité et à la robustesse des liens et des relations entre les caractéristiques techniques unitaires CTU à travers les différents niveaux de la structure hiérarchique du document brevet numérique. Cette cohérence évalue dans quelle mesure les dépendances techniques entre CTU sont logiques, continues et exemptes de contradictions ou de ruptures. À titre d'exemple, le terme « cohérence des chaînes de dépendance technique » peut désigner une structure hiérarchique où chaque CTU est correctement reliée à ses CTU parentes et enfants sans lien manquant, une organisation où les relations de dépendance technique suivent une logique claire et progressive d'un niveau à l'autre, un agencement où les CTU de différents niveaux s'articulent de manière fluide et cohérente pour décrire le fonctionnement global de l'invention, ou encore une hiérarchie technique où les dépendances entre CTU sont justifiées et pertinentes au regard du domaine technologique concerné. Dans le cas d'un brevet sur un système de véhicule autonome, une chaîne de dépendance technique cohérente pourrait être : « Système de navigation » (niveau 1) > « Module de perception de l'environnement » (niveau 2) > « Capteur LiDAR » (niveau 3) > « Algorithme de traitement du nuage de points » (niveau 4). Cette chaîne montre une progression logique du système global vers des composants et fonctions de plus en plus spécifiques, sans rupture ni contradiction dans les relations de dépendance.

Ensuite, le vecteur de caractéristiques stylométriques VCS peut également inclure des indicateurs de couverture technique.

Le terme « indicateurs de couverture technique » désigne un ensemble de mesures qui évaluent dans quelle mesure les caractéristiques techniques unitaires CTU sont explicitées, détaillées et étayées dans la description du document brevet numérique. À titre d'exemple, le terme « indicateurs de couverture technique » peut inclure un score de complétude qui évalue si tous les éléments techniques essentiels sont mentionnés et décrits, un indice de profondeur technique qui mesure le niveau de détail et de spécificité des explications fournies pour chaque CTU, une mesure de support contextuel qui vérifie si les CTU sont accompagnées d'informations sur leur mise en oeuvre ou leur environnement d'utilisation, ou encore un indicateur de consistance technique qui évalue si les descriptions des CTU sont homogènes et cohérentes tout au long du document.

Dans un premier exemple, les indicateurs de couverture technique mesurent le degré d'explicitation des caractéristiques techniques unitaires CTU dans la description.

Le terme « degré d'explicitation des caractéristiques techniques unitaires CTU dans la description » fait référence à la mesure dans laquelle chaque CTU est clairement identifiée, définie et détaillée au sein de la description du document brevet numérique. Ce degré d'explicitation reflète la précision et la clarté avec lesquelles les aspects techniques de l'invention sont présentés et expliqués. À titre d'exemple, le terme « degré d'explicitation des caractéristiques techniques unitaires CTU dans la description » peut désigner une échelle allant d'une simple mention nominale d'une CTU à une description approfondie de sa structure, de son fonctionnement et de ses interactions avec d'autres éléments, un score élevé attribué à une CTU dont tous les aspects essentiels sont détaillés de manière précise et complète, une évaluation moyenne pour une CTU décrite de façon succincte, mais suffisante pour en comprendre le rôle, ou encore un degré faible pour une CTU mentionnée de manière allusive ou ambiguë sans explication substantielle. Dans un brevet sur une nouvelle technologie de batterie pour véhicules électriques, un exemple de degré d'explicitation élevé pour une CTU « électrode composite» pourrait être : « L'électrode composite comprend une matrice de nanotubes de carbone (60 % en poids) imprégnée d'un matériau actif à base de lithium-fer-phosphate (35 % en poids) et d'un liant polymère conducteur (5 % en poids). La structure tridimensionnelle des nanotubes offre une surface active élevée de 500 m²/g, permettant une capacité de stockage de 200 mAh/g et une densité de puissance de 2000 W/kg. » Cette description fournit des détails précis sur la composition, la structure et les performances de la CTU.

Dans un deuxième exemple, les indicateurs de couverture technique évaluent la profondeur des explications techniques associées et la distribution des supports techniques dans la description.

Le terme « profondeur des explications techniques associées » désigne le niveau de détail et de spécificité avec lequel les caractéristiques techniques unitaires CTU sont expliquées et étayées dans la description du document brevet numérique. Cette profondeur reflète dans quelle mesure les aspects techniques de l'invention sont présentés de manière approfondie, en fournissant des informations précises et pertinentes sur chaque CTU. À titre d'exemple, le terme « profondeur des explications techniques associées » peut inclure une description détaillée de la structure interne et des composants d'une CTU, une explication approfondie du fonctionnement et des interactions d'une CTU avec d'autres éléments du système, une présentation circonstanciée des avantages techniques spécifiques apportés par une CTU, ou encore une analyse poussée des paramètres de mise en oeuvre et des conditions d'utilisation optimales d'une CTU dans le cadre de l'invention. Dans un brevet sur un nouveau processeur quantique, une explication technique approfondie pour la CTU « qubit supraconducteur » pourrait être : « Le qubit supraconducteur est basé sur une jonction Josephson en aluminium/oxyde d'aluminium/aluminium, fabriquée par évaporation à angle. La jonction a une surface de 0,02 µm² et une épaisseur d'oxyde de 2 nm, résultant en une capacité de 2 fF et une inductance de 10 nH. Le qubit opère à une fréquence de 5 GHz, avec un temps de cohérence T2 de 100 µs, obtenu grâce à un blindage magnétique multicouche et un filtrage cryogénique des lignes de contrôle. L'état du qubit est manipulé par des impulsions micro-ondes gaussiennes de 20 ns, générées par un générateur arbitraire de formes d'ondes avec une bande passante de 5 GHz. » Cette description fournit des détails techniques précis sur la structure, les paramètres de fonctionnement et les méthodes de contrôle du qubit.

Dans un troisième exemple, les indicateurs de couverture technique évaluent la distribution des supports techniques dans la description.

Le terme « distribution des supports techniques dans la description » fait référence à la répartition et à l'organisation des informations et explications techniques complémentaires qui étayent et clarifient les caractéristiques techniques unitaires CTU dans la description du document brevet numérique. Cette distribution reflète comment les supports techniques, tels que des exemples, des illustrations, des données expérimentales ou des références à l'état de la technique, sont agencés et intégrés dans la description pour renforcer la compréhension des CTU. À titre d'exemple, le terme « distribution des supports techniques dans la description » peut désigner une répartition équilibrée où chaque CTU est systématiquement accompagnée d'exemples concrets et d'illustrations pertinentes, une organisation où les supports techniques sont concentrés dans des sections dédiées pour une présentation approfondie de certaines CTU clés, une intégration ponctuelle de données expérimentales ou de références bibliographiques pour étayer les aspects novateurs de certaines CTU, ou encore une distribution adaptée au flux logique de la description, les supports techniques étant introduits progressivement pour accompagner l'explicitation graduelle des CTU. Dans un brevet sur un nouveau processeur quantique, une explication technique approfondie pour la CTU « qubit supraconducteur » pourrait être : « Le qubit supraconducteur est basé sur une jonction Josephson en aluminium/oxyde d'aluminium/aluminium, fabriquée par évaporation à angle. La jonction a une surface de 0,02 µm² et une épaisseur d'oxyde de 2 nm, résultant en une capacité de 2 fF et une inductance de 10 nH. Le qubit opère à une fréquence de 5 GHz, avec un temps de cohérence T2 de 100 µs, obtenu grâce à un blindage magnétique multicouche et un filtrage cryogénique des lignes de contrôle. L'état du qubit est manipulé par des impulsions micro-ondes gaussiennes de 20 ns, générées par un générateur arbitraire de formes d'ondes avec une bande passante de 5 GHz. » Cette description fournit des détails techniques précis sur la structure, les paramètres de fonctionnement et les méthodes de contrôle du qubit.

Ensuite, le vecteur de caractéristiques stylométriques VCS peut également inclure des métriques de style rédactionnel spécifiques aux brevets.

Le terme « métriques de style rédactionnel spécifiques aux brevets » désigne un ensemble de mesures quantitatives qui caractérisent les particularités stylistiques et les conventions d'écriture propres aux documents brevets. Ces métriques évaluent dans quelle mesure le document analysé respecte les normes et les pratiques rédactionnelles typiques du genre spécifique au brevet, tant sur le plan de la forme que du contenu technique. À titre d'exemple, le terme « métriques de style rédactionnel spécifiques aux brevets » peut inclure des indicateurs mesurant la fréquence d'utilisation de tournures de phrase et de formulations stéréotypées propres aux brevets, des scores évaluant la conformité de la structure du document aux sections et sous-sections conventionnelles d'un brevet, des indices quantifiant la présence de marqueurs linguistiques caractéristiques tels que des expressions d'antériorité ou de nouveauté, ou encore des mesures de densité terminologique reflétant l'emploi intensif de termes techniques et juridiques spécialisés.

Dans un premier exemple, les métriques de style rédactionnel spécifiques aux brevets comprennent des patterns de présentation des caractéristiques techniques.

Le terme « patterns de présentation des caractéristiques techniques » fait référence aux modèles récurrents et aux régularités observables dans la manière dont les caractéristiques techniques unitaires CTU sont introduites, agencées et décrites au sein du document brevet numérique. Ces patterns reflètent les choix stylistiques et structurels adoptés par le rédacteur pour présenter efficacement les aspects techniques de l'invention. À titre d'exemple, le terme « patterns de présentation des caractéristiques techniques » peut désigner une tendance à introduire systématiquement chaque CTU par une phrase de définition suivie d'explications détaillées, un modèle récurrent où les CTU sont regroupées et présentées par ensembles fonctionnels cohérents, une régularité dans l'emploi de marqueurs linguistiques spécifiques (tels que « selon l'invention... » ou « de préférence... ») pour introduire ou qualifier les CTU, ou encore un pattern visuel consistant à faire précéder chaque description de CTU par une sous-section titrée ou un identifiant numérique. Dans un brevet sur un système de conduite autonome, un pattern de présentation pourrait être :
1) Introduction de la CTU principale (ex. : « Le système de perception environnementale comprend... »),
2) Définition détaillée de ses composants (ex. : « Le capteur LiDAR est configuré pour... »),
3) Explication de son fonctionnement (ex. : « Lors de la détection d'un obstacle, le système procède comme suit... »),
4) Présentation des avantages (ex. : « Grâce à cette configuration, le système offre une précision accrue de... »),
5) Variantes possibles (ex. : « Dans une variante de réalisation, le capteur LiDAR peut être remplacé par... »).
Ce pattern serait répété pour chaque CTU majeure du système de conduite autonome.

Dans un deuxième exemple, les métriques de style rédactionnel spécifiques aux brevets peuvent inclure des schémas récurrents d'organisation des informations techniques.

Le terme « schémas récurrents d'organisation des informations techniques » désigne les structures et les agencements typiques selon lesquels les différents éléments d'information technique (caractéristiques, explications, exemples, illustrations...) sont ordonnés et articulés au sein du document brevet numérique. Ces schémas reflètent les choix de présentation et de progression logique adoptés pour communiquer efficacement le contenu technique. À titre d'exemple, le terme « schémas récurrents d'organisation des informations techniques » peut inclure une structure où les informations sont systématiquement présentées en allant du général au particulier, avec une vue d'ensemble suivie de détails plus spécifiques, un agencement où les différents aspects techniques de l'invention sont abordés selon un ordre logique de dépendance ou de fonctionnement, un schéma de progression où chaque section s'appuie sur les informations de la précédente pour introduire de nouveaux éléments techniques, ou encore une organisation modulaire segmentant le contenu en blocs d'informations autonomes, mais interconnectés. Dans un brevet sur un procédé de fabrication de semi-conducteurs, un schéma récurrent d'organisation pourrait être :
1) Présentation générale du procédé (vue d'ensemble des étapes principales),
2) Description détaillée de chaque étape (ex. : dépôt, gravure, dopage) dans l'ordre chronologique du procédé,
3) Pour chaque étape :
   a) Paramètres techniques (température, pression, durée),
   b) Équipement utilisé,
   c) Réactions chimiques impliquées,
   d) Contrôle qualité associé,
4) Interconnexions entre les étapes (comment le résultat d'une étape influence la suivante),
5) Variantes du procédé pour différents types de semi-conducteurs.
Ce schéma permettrait une progression logique de l'information, du général au spécifique, tout en maintenant une cohérence dans la présentation de chaque étape du procédé.

Dans un troisième exemple, les métriques de style rédactionnel spécifiques aux brevets peuvent inclure des indicateurs de complétude technique.

Le terme « indicateurs de complétude technique » fait référence à des mesures évaluant dans quelle mesure la description fournie dans le document brevet numérique couvre de manière exhaustive et suffisante tous les aspects techniques essentiels de l'invention. Ces indicateurs reflètent le degré d'adéquation et de complétude des informations techniques présentées pour permettre à un homme du métier de comprendre, reproduire et mettre en oeuvre l'invention. À titre d'exemple, le terme « indicateurs de complétude technique » peut inclure un score mesurant la proportion de caractéristiques techniques essentielles qui sont effectivement décrites et explicitées dans le document, un indice évaluant si tous les modes de réalisation ou variantes pertinents de l'invention sont abordés, une mesure vérifiant la présence d'informations suffisantes sur les conditions et paramètres de mise en oeuvre de l'invention, ou encore un indicateur de cohérence évaluant si toutes les interactions et dépendances entre les différents éléments techniques sont clairement explicitées. Dans le cas d'un brevet sur une nouvelle formulation pharmaceutique, un indicateur de complétude technique pourrait être un « score de couverture des excipients » qui évalue, sur une échelle de 0 à 100 %, le pourcentage des excipients mentionnés dans les revendications qui sont effectivement décrits en détail dans la description (composition, fonction, proportion). Un score de 90 % indiquerait une description très complète des excipients utilisés. Un autre exemple serait un « indice d'exhaustivité des modes de réalisation » qui attribue une note de 1 à 5 en fonction du nombre et de la variété des exemples de mise en oeuvre fournis, avec une note de 5 reflétant une description détaillée de nombreuses variantes et applications possibles de la formulation.

Le vecteur de caractéristiques stylométriques VCS peut également comprendre des statistiques sur la longueur moyenne et l'écart-type des phrases dans les paragraphes élémentaires PE.

Le terme « statistiques sur la longueur moyenne et l'écart-type des phrases dans les paragraphes élémentaires PE » désigne des mesures quantitatives caractérisant la distribution et la variabilité de la longueur des phrases au sein des unités textuelles de base (paragraphes élémentaires) qui composent la description du document brevet numérique. Ces statistiques reflètent des aspects stylistiques liés à la concision et à la complexité syntaxique du texte. À titre d'exemple, le terme « statistiques sur la longueur moyenne et l'écart-type des phrases dans les paragraphes élémentaires PE » peut inclure une longueur moyenne de phrase relativement élevée indiquant un style rédactionnel privilégiant des explications détaillées et des constructions syntaxiques élaborées, un faible écart-type révélant une homogénéité et une régularité dans la structure des phrases employées, une combinaison d'une longueur moyenne réduite et d'un fort écart-type suggérant un style alternant phrases courtes et longues pour rythmer l'explication technique, ou encore une évolution de ces statistiques au fil du document reflétant une variation délibérée du style en fonction des sections. Par exemple, dans un brevet décrivant un protocole de communication sans fil, on pourrait observer les statistiques suivantes : une longueur moyenne de phrase de 25 mots dans la section « Contexte de l'invention » (reflétant des phrases relativement longues pour poser le cadre), puis une moyenne de 15 mots dans la section « Description détaillée » (indiquant des phrases plus concises pour expliquer chaque étape du protocole), avec un écart-type global de 8 mots (montrant une variabilité significative de la longueur des phrases au fil du document). Ces statistiques suggèrent un style rédactionnel adaptant la complexité syntaxique au contenu technique de chaque section.

En complément, le vecteur de caractéristiques stylométriques VCS peut également comprendre des mesures de richesse lexicale basées sur le ratio type-occurrence et l'indice de Yule.

Le terme « mesures de richesse lexicale basées sur le ratio type-occurrence et l'indice de Yule » fait référence à des indicateurs quantitatifs évaluant la diversité et la variété du vocabulaire employé dans le document brevet numérique. Le ratio type-occurrence (TTR) rapporte le nombre de mots distincts (types) au nombre total de mots (occurrences) tandis que l'indice de Yule mesure la probabilité que deux mots choisis aléatoirement soient identiques. À titre d'exemple, le terme « mesures de richesse lexicale basées sur le ratio type-occurrence et l'indice de Yule » peut inclure un TTR élevé indiquant l'emploi d'un vocabulaire varié et précis avec peu de répétitions, un faible indice de Yule reflétant une grande diversité lexicale et l'absence de mots suremployés, une combinaison d'un TTR moyen et d'un indice de Yule réduit suggérant un équilibre entre technicité et lisibilité du lexique, ou encore une variation de ces mesures entre les sections reflétant une adaptation du niveau de langue aux différentes parties du document brevet numérique. Dans un brevet sur un dispositif médical implantable, on pourrait s'attendre aux mesures suivantes : un TTR de 0,25 (indiquant qu'en moyenne, chaque mot est utilisé 4 fois) et un indice de Yule de 50 (reflétant une probabilité relativement faible que deux mots choisis au hasard soient identiques). Ces valeurs suggèrent l'emploi d'un vocabulaire technique diversifié, avec une répétition modérée des termes clés pour assurer la clarté. Une analyse par section pourrait révéler un TTR plus élevé dans la description détaillée (reflétant l'introduction de nombreux termes techniques spécifiques), et un indice de Yule plus faible dans le préambule (indiquant une plus grande redondance lexicale dans la partie introductive).

Enfin, le vecteur de caractéristiques stylométriques VCS peut également comprendre des indicateurs de fréquence d'utilisation des structures syntaxiques propres aux brevets.

Le terme « indicateurs de fréquence d'utilisation des structures syntaxiques propres aux brevets » désigne des mesures quantitatives évaluant la récurrence et la prévalence de constructions grammaticales et de tournures de phrase typiques du style rédactionnel des brevets dans le document analysé. Ces indicateurs reflètent dans quelle mesure le texte adopte les conventions syntaxiques propres à ce genre de document technique et juridique. À titre d'exemple, le terme « indicateurs de fréquence d'utilisation des structures syntaxiques propres aux brevets » peut inclure un score élevé de recours aux phrases complexes multi-propositions reflétant un style explicatif détaillé, une forte occurrence de structures passives et impersonnelles conférant un ton objectif et factuel au texte, une prévalence de propositions relatives et de compléments circonstanciels traduisant une volonté de précision et d'exhaustivité, ou encore une fréquence significative de constructions conditionnelles introduisant des variantes et des modes de réalisation alternatifs de l'invention. Il peut également s'agir de la présence de formulations standardisées pour décrire les revendications, telles que « caractérisé en ce que... » ou « comprenant les étapes de... », de l'utilisation fréquente de propositions relatives pour définir précisément les éléments techniques, comme « un dispositif qui comprend un élément A, ledit élément A étant conçu pour... », de constructions syntaxiques complexes visant à englober un large champ d'application tout en restant précises, comme l'emploi de listes hiérarchisées ou de descriptions alternatives, de l'usage de termes de liaison spécifiques pour établir des relations entre différentes parties de l'invention, tels que « en outre », « de préférence », « avantageusement », ou encore de structures permettant de faire référence à des éléments antérieurs du document, comme « selon l'une quelconque des revendications précédentes ». Dans un brevet sur un procédé chimique, les indicateurs pourraient révéler les tendances suivantes : 30 % des phrases contiennent au moins 3 propositions (reflétant la prédominance de phrases complexes détaillant les étapes et les conditions du procédé), 40 % des verbes principaux sont à la voix passive (conférant un style impersonnel et objectif), 25 % des phrases comportent une proposition relative (introduisant des précisions sur les composés et les paramètres), et 10 % des phrases incluent une construction conditionnelle (décrivant des variantes ou des exemples spécifiques du procédé). Ces fréquences élevées de structures syntaxiques typiques des brevets contribuent à un style rédactionnel à la fois détaillé, précis et objectif, adapté à la description d'une invention chimique. Par ailleurs, dans un brevet sur un système de freinage antiblocage pour véhicules, on pourrait observer les indicateurs suivants :
- un taux élevé (70 %) de phrases complexes multi-propositions, comme : « Le système de freinage, qui comprend un module de contrôle électronique, des capteurs de vitesse de roue et des modulateurs de pression hydraulique, est configuré pour ajuster la pression de freinage de manière à empêcher le blocage des roues lors d'un freinage d'urgence. »
- une forte proportion (60 %) de structures passives, telles que : « La pression hydraulique est modulée en fonction des signaux reçus des capteurs de vitesse de roue.
- une fréquence élevée (80 %) de propositions relatives pour définir les composants, par exemple : « Le module de contrôle électronique, qui traite les signaux des capteurs et commande les modulateurs de pression, est programmé pour réagir en moins de 10 millisecondes à une situation de blocage imminent. », et
- un usage fréquent (50 % des paragraphes) de termes de liaison spécifiques, comme : « En outre, le système comprend un dispositif d'auto-diagnostic qui, avantageusement, permet une détection précoce des dysfonctionnements. »
Ces indicateurs reflètent un style rédactionnel typique des brevets, combinant précision technique, exhaustivité et flexibilité dans la description de l'invention.

### Deuxième aspect de l'invention : système d'analyse stylométrique de documents brevets basé sur l'extraction de caractéristiques techniques et la génération de graphes de données

Un deuxième aspect de l'invention concerne un système 200 implémenté par ordinateur d'analyse stylométrique de documents brevets qui intègre plusieurs modules fonctionnels interconnectés.

Le système 200 comprend une base de données 210 qui stocke une pluralité de documents brevets, chaque document brevet numérique contenant une description D et un jeu de revendications R.

Le terme « base de données » désigne un système 200 de stockage et d'organisation structurée d'informations numériques qui permet un accès rapide et efficace aux données relatives aux documents brevets. Cette base de données 210 facilite la récupération, la mise à jour et l'analyse des informations contenues dans les brevets. À titre d'exemple, le terme « base de données » peut désigner un système de gestion de base de données relationnelle qui organise les documents brevets en tables interconnectées, permettant des requêtes complexes sur les caractéristiques techniques et les paragraphes élémentaires. Il peut également faire référence à une base de données 210 orientée document qui stocke chaque brevet comme un objet unique avec sa structure interne, facilitant ainsi la manipulation de documents entiers. Enfin, il peut s'agir d'une base de données 210 graphe qui modélise directement les relations entre les différents éléments des brevets, optimisant les opérations sur le graphe de données GD. Plus concrètement, on pourrait utiliser une base de données relationnelle PostgreSQL pour stocker les métadonnées des brevets (numéro, date de dépôt, inventeurs, etc.) dans une table « Brevets », les caractéristiques techniques unitaires dans une table « CTU », et les paragraphes élémentaires dans une table « PE », avec des clés étrangères pour établir les relations. Pour une approche orientée document, MongoDB pourrait être utilisé pour stocker chaque brevet comme un document JSON, avec des sous-documents pour les CTU et les PE. Enfin, une base de données graphe comme Neo4j pourrait être employée pour représenter directement les brevets, les CTU et les PE comme des noeuds, et leurs relations comme des arêtes, permettant des requêtes efficaces sur la structure du graphe de données.

En premier lieu, un module de segmentation 220 divise chaque document brevet numérique en une partie description D et une partie revendications R.

Par la suite, un module d'extraction 230 procède à l'analyse syntaxique et sémantique pour extraire un ensemble de caractéristiques techniques unitaires CTU de chaque partie revendications R ainsi qu'un ensemble de paragraphes élémentaires PE de chaque partie description D.

En complément, un module de génération de graphe 240 crée, pour chaque document brevet numérique, un graphe de données GD. Ce graphe GD contient des noeuds N1 représentant les caractéristiques techniques unitaires CTU et des noeuds N2 représentant les paragraphes élémentaires PE. De plus, le graphe comprend des arêtes orientées A qui relient les noeuds N1 et N2 pour représenter des relations sémantiques.

Un module d'analyse de graphe 250 remplit deux fonctions principales. D'une part, il génère pour chaque document brevet numérique un vecteur de caractéristiques stylométriques VCS qui inclut une distribution spatiale des CTU dans la description D et les scores de similarité sémantique S entre les CTU et les PE. D'autre part, il analyse la topologie de chaque graphe de données GD et chaque vecteur de caractéristiques stylométriques VCS via un modèle d'apprentissage machine entraîné pour déterminer au moins un indicateur de structure IS et un style de répartition SR des CTU dans la description D.

Enfin, le système 200 comprend une interface utilisateur 260 qui affiche, pour au moins un document brevet numérique, le graphe de données GD, l'indicateur de structure IS et le style de répartition SR.

Le terme « interface utilisateur » fait référence à un composant logiciel du système 200 d'analyse stylométrique qui permet l'interaction entre l'utilisateur humain et le système 200 informatique. Cette interface sert de point de contact visuel et interactif à travers lequel l'utilisateur peut accéder aux fonctionnalités du système 200, visualiser les résultats de l'analyse et interagir avec les données des brevets. À titre d'exemple, le terme « interface utilisateur 260' peut désigner un tableau de bord interactif qui présente une vue d'ensemble des analyses stylométriques effectuées sur les brevets, avec des graphiques et des visualisations dynamiques. Il peut également faire référence à un outil de navigation permettant à l'utilisateur d'explorer le graphe de données GD de manière interactive, en zoomant sur certaines parties ou en filtrant les informations affichées. Enfin, il peut s'agir d'un système 200 de génération de rapports personnalisables qui permet à l'utilisateur de sélectionner les indicateurs et les styles de répartition qu'il souhaite examiner pour un ou plusieurs brevets. Par exemple, l'interface utilisateur pourrait être développée avec le framework React.js, offrant un tableau de bord dynamique avec des composants tels que des graphiques interactifs créés avec D3.js pour visualiser la distribution spatiale des CTU. Un outil de navigation du graphe de données pourrait être implémenté en utilisant la bibliothèque Cytoscape.js, permettant aux utilisateurs de zoomer, filtrer et explorer les relations entre les CTU et les PE. Pour la génération de rapports, l'interface pourrait intégrer un module basé sur la bibliothèque pdfmake, permettant aux utilisateurs de sélectionner des indicateurs spécifiques (comme le score de similarité sémantique ou l'indice de densité technique) et de générer des rapports PDF personnalisés pour un ou plusieurs brevets sélectionnés.

### Premier mode de réalisation du deuxième aspect de l'invention : analyse avancée des caractéristiques techniques dans les brevets : métriques de densité adaptative et structure hiérarchique

Dans un premier mode de réalisation du deuxième aspect de l'invention, le module d'analyse de graphe 250 intègre des fonctionnalités supplémentaires pour l'analyse approfondie des caractéristiques techniques.

En pratique, le module d'analyse de graphe 250 calcule des métriques de densité technique adaptative.

Le terme « métriques de densité technique adaptative » fait référence à un ensemble de mesures quantitatives qui évaluent la concentration et la répartition des caractéristiques techniques unitaires (CTU) dans le document brevet numérique, en s'adaptant à différents facteurs contextuels. Ces métriques prennent en compte des aspects tels que l'importance hiérarchique des CTU et le domaine technique du brevet pour fournir une évaluation nuancée et pertinente de la densité technique. À titre d'exemple, le terme « métriques de densité technique adaptative » peut désigner un indicateur qui pondère la densité des CTU en fonction de leur niveau de profondeur dans la structure hiérarchique des revendications, accordant ainsi plus de poids aux caractéristiques fondamentales. Il peut également faire référence à une mesure qui normalise la densité technique par rapport aux standards et aux pratiques du domaine technologique concerné, permettant ainsi des comparaisons pertinentes entre brevets de différents secteurs. Enfin, il peut s'agir d'une métrique qui ajuste dynamiquement le calcul de la densité en fonction de la distribution spatiale des CTU dans les différentes sections du document, offrant ainsi une vue plus fine de leur répartition.

Dans un premier exemple, les métriques de densité technique adaptative peuvent comprendre une densité pondérée par l'importance hiérarchique des CTU.

Le terme « densité pondérée par l'importance hiérarchique des CTU » désigne une mesure spécifique au sein des métriques de densité technique adaptative qui prend en compte la position relative des caractéristiques techniques unitaires dans la structure hiérarchique des revendications. Cette mesure attribue un poids différent à chaque CTU en fonction de son niveau de profondeur ou de sa centralité dans l'arborescence des revendications, partant du principe que les caractéristiques de plus haut niveau ont une importance plus grande dans la définition de l'invention. À titre d'exemple, le terme « densité pondérée par l'importance hiérarchique des CTU » peut faire référence à un calcul où les CTU situées dans les revendications indépendantes se voient attribuer un poids plus élevé que celles présentes dans les revendications dépendantes. Par exemple, dans un brevet sur un dispositif électronique, une CTU décrivant un « processeur » dans une revendication indépendante pourrait avoir un poids de 1,0, tandis qu'une CTU décrivant une « mémoire cache » dans une revendication dépendante pourrait avoir un poids de 0,7. Il peut également désigner une pondération graduelle où le poids diminue progressivement à mesure que l'on descend dans la hiérarchie des revendications, reflétant ainsi la spécificité croissante des caractéristiques. Par exemple, dans un brevet sur un procédé de fabrication, une CTU décrivant une « étape de mélange » dans une revendication indépendante pourrait avoir un poids de 1,0, une CTU décrivant une « température de mélange » dans une revendication dépendante de premier niveau pourrait avoir un poids de 0,8, et une CTU décrivant un «type spécifique d'agitateur» dans une revendication dépendante de second niveau pourrait avoir un poids de 0,6. Enfin, il peut s'agir d'une approche qui attribue des poids en fonction de la centralité ou du degré de connectivité des CTU dans le graphe des relations de dépendance entre revendications. Par exemple, dans un brevet sur un système de communication, une CTU décrivant un « module de transmission » qui est référencée dans plusieurs revendications dépendantes pourrait avoir un poids plus élevé (par exemple 0,9) qu'une CTU décrivant un « filtre optionnel » mentionné dans une seule revendication dépendante (poids de 0,5).

Dans un deuxième exemple, les métriques de densité technique adaptative peuvent également comprendre une densité normalisée par domaine technique.

Le terme « densité normalisée par domaine technique » fait référence à une autre mesure spécifique des métriques de densité technique adaptative qui ajuste le calcul de la densité des caractéristiques techniques unitaires en fonction des normes, des pratiques et des attentes propres au domaine technologique du brevet. Cette normalisation vise à prendre en compte les variations significatives qui existent entre différents domaines en termes de complexité technique, de niveau de détail dans la description des inventions et de conventions de rédaction des brevets. À titre d'exemple, le terme « densité normalisée par domaine technique » peut désigner un calcul où la densité brute des CTU est divisée par une valeur de référence représentant la densité moyenne observée dans un large corpus de brevets du même domaine, permettant ainsi de situer le brevet analysé par rapport à la norme sectorielle. Par exemple, dans le domaine des semi-conducteurs, où les brevets sont généralement très détaillés, une densité de 50 CTU par 1000 mots pourrait être considérée comme moyenne (valeur normalisée de 1,0), tandis que dans le domaine des dispositifs mécaniques simples, une densité de 20 CTU par 1000 mots pourrait être considérée comme la norme (également une valeur normalisée de 1,0). Il peut également faire référence à une approche qui utilise des seuils de densité différenciés selon le domaine pour qualifier le niveau de densité technique (par exemple, faible, moyen, élevé) de manière adaptée aux spécificités de chaque secteur. Par exemple, dans le domaine des biotechnologies, un brevet avec une densité normalisée inférieure à 0,8 pourrait être considéré comme ayant une faible densité technique, entre 0,8 et 1,2 comme moyenne, et supérieure à 1,2 comme élevée. En revanche, dans le domaine des technologies de l'information, ces seuils pourraient être ajustés à 0,7, 0,7-1,3, et supérieur à 1,3 respectivement. Enfin, il peut s'agir d'une mesure qui pondère la densité des CTU en fonction de leur fréquence d'apparition ou de leur importance relative dans le domaine considéré, telles que déterminées à partir d'une analyse statistique d'un corpus représentatif. Par exemple, dans le domaine des télécommunications, une CTU décrivant un « protocole de communication » pourrait avoir un poids plus élevé (par exemple 1,2) qu'une CTU décrivant un « boîtier de protection » (poids de 0,8), reflétant ainsi l'importance relative de ces concepts dans ce domaine spécifique.

De plus, le module analyse la distribution spatiale des CTU en prenant en considération la structure hiérarchique des revendications.

Le terme « structure hiérarchique des revendications » désigne l'organisation arborescente qui caractérise l'agencement des revendications dans un document brevet numérique. Cette structure reflète les relations de dépendance et de subordination entre les différentes revendications, depuis les revendications indépendantes qui définissent les aspects les plus généraux de l'invention jusqu'aux revendications dépendantes qui introduisent des caractéristiques plus spécifiques ou des variantes. À titre d'exemple, le terme « structure hiérarchique des revendications » peut faire référence à une organisation pyramidale où une ou plusieurs revendications indépendantes de niveau supérieur sont suivies de revendications dépendantes de premier niveau, elles-mêmes pouvant être précisées par des revendications dépendantes de second niveau, et ainsi de suite. Par exemple, dans un brevet sur un dispositif médical, la revendication indépendante 1 pourrait décrire le concept général d'un « cathéter avec un ballonnet gonflable », la revendication dépendante 2 préciser « le cathéter de la revendication 1, où le ballonnet est en polyuréthane », et la revendication dépendante 3 ajouter « le cathéter de la revendication 2, où le polyuréthane a une épaisseur comprise entre 0,1 et 0,5 mm ». Il peut également désigner une structure en arbre où chaque revendication est reliée à une revendication parente unique, formant ainsi des chaînes de dépendance clairement identifiables. Par exemple, dans un brevet sur un procédé chimique, la revendication 1 pourrait décrire une « méthode de synthèse d'un composé X», avec les revendications 2 à 5 dépendant directement de la revendication 1 et décrivant des étapes ou des conditions réactionnelles spécifiques, tandis que les revendications 6 à 8 dépendraient de la revendication 3 et préciseraient des catalyseurs ou des solvants particuliers. Enfin, il peut s'agir d'une représentation sous forme de graphe orienté acyclique, où les noeuds représentent les revendications et les arcs représentent les relations de dépendance, permettant une visualisation claire de l'architecture logique des revendications. Par exemple, dans un brevet sur un système informatique, un tel graphe pourrait montrer la revendication indépendante 1 comme racine, avec de multiples niveaux de revendications dépendantes en dessous, certaines revendications ayant plusieurs « enfants » (revendications qui en dépendent), tandis que d'autres seraient des « feuilles » (revendications ne donnant lieu à aucune dépendance supplémentaire).

Simultanément, cette analyse intègre les dépendances techniques entre caractéristiques.

Le terme « dépendances techniques entre caractéristiques » fait référence aux relations de subordination, de complémentarité ou d'interaction qui existent entre les différentes caractéristiques techniques unitaires (CTU) décrites dans les revendications d'un brevet. Ces dépendances reflètent la manière dont les CTU sont liées les unes aux autres sur le plan fonctionnel, structurel ou procédural, formant ainsi un système 200 cohérent qui définit l'invention. À titre d'exemple, le terme « dépendances techniques entre caractéristiques » peut désigner une relation hiérarchique où une CTU de niveau supérieur englobe ou nécessite la présence de CTU subordonnées pour être opérationnelle. Par exemple, dans un brevet sur un moteur électrique, la CTU « rotor » pourrait nécessiter la présence des CTU « aimants permanents » et « arbre de rotation » pour constituer un ensemble fonctionnel. Il peut également faire référence à des relations de complémentarité fonctionnelle, où plusieurs CTU interagissent de manière synergique pour réaliser une fonction donnée de l'invention. Par exemple, dans un brevet sur un dispositif de télécommunication, les CTU « émetteur RF », « encodeur de signal » et « antenne » pourraient coopérer pour assurer la transmission efficace des données. Enfin, il peut s'agir de dépendances séquentielles, où certaines CTU doivent être mises en oeuvre selon un ordre spécifique pour garantir le bon fonctionnement du procédé ou du système breveté. Par exemple, dans un brevet sur un procédé de traitement des eaux usées, les CTU « étape de filtration primaire », « étape de traitement biologique » et « étape de désinfection UV » pourraient devoir être réalisées consécutivement pour obtenir l'épuration souhaitée. L'analyse de ces dépendances techniques est importante pour comprendre la structure logique de l'invention et évaluer l'importance relative des différentes caractéristiques.

### Deuxième mode de réalisation du deuxième aspect de l'invention : optimisation dynamique et contextuelle des paramètres d'analyse stylométrique des brevets

Dans un deuxième mode de réalisation du deuxième aspect de l'invention, le système 200 intègre un module d'optimisation 270 qui effectue des ajustements dynamiques et des adaptations contextuelles des paramètres d'analyse.

En pratique, le module d'optimisation 270 ajuste dynamiquement les poids des différentes caractéristiques stylométriques dans le vecteur de caractéristiques stylométriques VCS.

Le terme « les poids des différentes caractéristiques stylométriques dans le vecteur de caractéristiques stylométriques VCS » désigne les coefficients numériques attribués à chaque caractéristique stylométrique au sein du vecteur de caractéristiques stylométriques (VCS). Ces poids reflètent l'importance relative accordée à chaque caractéristique dans l'analyse globale du style rédactionnel du document brevet numérique. Le module d'optimisation 270 ajuste dynamiquement ces poids pour améliorer la précision et la pertinence de l'analyse stylométrique. À titre d'exemple, le terme « les poids des différentes caractéristiques stylométriques dans le vecteur de caractéristiques stylométriques VCS » peut désigner un coefficient élevé attribué à la fréquence d'utilisation de termes techniques spécifiques au domaine, reflétant ainsi leur importance dans la caractérisation du style du brevet. Par exemple, dans un brevet du domaine des télécommunications, les termes techniques tels que « protocole », « modulation » ou « bande passante » pourraient se voir attribuer un poids de 0,8 sur une échelle de 0 à 1. Il peut également faire référence à un poids modéré accordé à la longueur moyenne des phrases, qui contribue à l'analyse du style, mais de manière moins déterminante. Par exemple, la longueur moyenne des phrases pourrait avoir un poids de 0,5 dans le vecteur de caractéristiques stylométriques. Enfin, il peut s'agir d'un poids faible attribué à certaines caractéristiques stylistiques générales qui s'avèrent moins pertinentes dans le contexte spécifique des documents brevets. Par exemple, la fréquence d'utilisation d'adverbes ou la complexité du vocabulaire pourraient avoir un poids de seulement 0,2 dans l'analyse stylométrique d'un brevet.

Plus précisément, ces ajustements peuvent prendre en compte le pouvoir prédictif des caractéristiques stylométriques sur l'indicateur de structure IS.

Le terme « le pouvoir prédictif des caractéristiques sur l'indicateur de structure IS » fait référence à la capacité de chaque caractéristique stylométrique à anticiper ou à expliquer l'indicateur de structure (IS) du document brevet numérique. Ce pouvoir prédictif mesure à quel point une caractéristique donnée contribue de manière fiable et significative à la détermination de l'indicateur de structure. Le module d'optimisation 270 prend en compte ce pouvoir prédictif pour ajuster les poids des caractéristiques dans le vecteur de caractéristiques stylométriques VCS. À titre d'exemple, le terme « le pouvoir prédictif des caractéristiques sur l'indicateur de structure IS » peut désigner une forte corrélation entre la distribution des caractéristiques techniques unitaires (CTU) dans le document et la structure globale du brevet, indiquant un pouvoir prédictif élevé pour cette caractéristique. Par exemple, si l'analyse statistique révèle qu'une concentration élevée de CTU dans les revendications est associée à 80 % du temps à un IS élevé, le poids de cette caractéristique pourrait être fixé à 0,9. Il peut également faire référence à une relation modérée entre la complexité syntaxique des phrases et l'indicateur de structure, suggérant un pouvoir prédictif moyen. Par exemple, si la longueur moyenne des phrases n'explique que 60 % de la variabilité de l'IS, son poids pourrait être fixé à 0,6. Enfin, il peut s'agir d'une faible association entre certaines caractéristiques lexicales générales et l'IS, indiquant un pouvoir prédictif limité pour ces éléments. Par exemple, si la diversité du vocabulaire n'est corrélée qu'à 30 % avec l'IS, son poids pourrait être limité à 0,3 dans le vecteur de caractéristiques stylométriques.

En outre, ces ajustements peuvent également prendre en compte la pertinence technique des caractéristiques stylométriques dans le domaine concerné.

Le terme « la pertinence technique des caractéristiques dans le domaine concerné » désigne l'adéquation et l'importance relative des caractéristiques stylométriques par rapport au domaine technique spécifique du brevet analysé. Cette pertinence technique évalue dans quelle mesure chaque caractéristique reflète efficacement les conventions, les pratiques et les particularités rédactionnelles propres au domaine technologique en question. Le module d'optimisation 270 intègre cette pertinence technique pour affiner l'ajustement des poids des caractéristiques. À titre d'exemple, le terme « la pertinence technique des caractéristiques dans le domaine concerné » peut désigner une haute pertinence accordée à l'utilisation de terminologie spécialisée dans un brevet du domaine de la biotechnologie, où la précision du vocabulaire technique est primordiale. Par exemple, dans un brevet sur un nouveau médicament, la fréquence et la spécificité des termes liés à la pharmacologie pourraient avoir un poids de 0,9 en raison de leur forte pertinence technique. Il peut également faire référence à une pertinence moyenne attribuée à la structure des revendications dans un brevet du domaine mécanique, où les conventions de rédaction peuvent varier. Par exemple, dans un brevet sur un nouveau moteur, la structure hiérarchique des revendications pourrait avoir un poids de 0,6 reflétant une pertinence modérée. Enfin, il peut s'agir d'une faible pertinence assignée à certaines caractéristiques stylistiques générales dans un brevet du domaine informatique, où l'accent est davantage mis sur la description fonctionnelle que sur le style littéraire. Par exemple, dans un brevet sur un algorithme de cryptage, la complexité syntaxique des phrases pourrait n'avoir qu'un poids de 0,2 en raison de sa faible pertinence technique.

Par ailleurs, ces ajustements peuvent également prendre en compte l'impact des caractéristiques stylométriques sur la cohérence globale du document.

Le terme « impact des caractéristiques sur la cohérence globale du document » fait référence à l'influence qu'exercent les différentes caractéristiques stylométriques sur la logique interne, la clarté et l'uniformité du document brevet numérique dans son ensemble. Cet impact évalue comment chaque caractéristique contribue à créer un document cohérent et bien structuré, facilitant ainsi sa compréhension et son interprétation. Le module d'optimisation 270 prend en compte cet impact pour ajuster les poids des caractéristiques de manière à favoriser la cohérence globale du document. À titre d'exemple, le terme « impact des caractéristiques sur la cohérence globale du document » peut désigner un fort impact positif de la consistance terminologique sur la clarté et l'uniformité du brevet, contribuant ainsi significativement à sa cohérence globale. Par exemple, l'utilisation cohérente des mêmes termes techniques tout au long du document pourrait avoir un poids de 0,8 en raison de son impact majeur sur la compréhensibilité du brevet. Il peut également faire référence à un impact modéré de la structure des paragraphes sur la fluidité de la lecture et la compréhension logique du document. Par exemple, une organisation claire des paragraphes avec des transitions logiques pourrait avoir un poids de 0,6 reflétant son impact significatif, mais non déterminant sur la cohérence. Enfin, il peut s'agir d'un faible impact de certaines caractéristiques stylistiques superficielles qui, bien que présentes, n'affectent pas substantiellement la cohérence globale du brevet. Par exemple, la variation de la longueur des phrases pourrait n'avoir qu'un poids de 0,2 car elle n'influe que marginalement sur la cohérence d'ensemble du document brevet.

Par ailleurs, le module d'optimisation 270 adapte les paramètres d'analyse selon plusieurs critères.

Tout d'abord, il peut prend en compte le domaine technique du brevet. Ensuite, il peut considérer le style de rédaction identifié. Enfin, le module peut intégrer les retours d'expérience sur les prédictions antérieures.

Le terme « les retours d'expérience sur les prédictions antérieures » désigne l'ensemble des informations et des enseignements tirés des analyses stylométriques précédemment effectuées par le système 200 sur d'autres documents brevets. Ces retours d'expérience incluent les évaluations de la précision des prédictions passées, les ajustements qui se sont avérés efficaces, et les tendances observées dans différents domaines techniques ou styles de rédaction. Le module d'optimisation 270 intègre ces retours d'expérience pour affiner et améliorer continuellement ses paramètres d'analyse. À titre d'exemple, le terme « les retours d'expérience sur les prédictions antérieures » peut désigner l'identification de certaines caractéristiques stylométriques qui se sont révélées particulièrement prédictives pour des brevets dans un domaine technique spécifique, permettant ainsi d'ajuster leur pondération pour de futures analyses. Par exemple, si dans le domaine de la chimie, la fréquence d'utilisation de formules moléculaires s'est avérée un excellent prédicteur de l'IS dans 90 % des cas, le poids de cette caractéristique pourrait être augmenté à 0,95 pour les brevets de ce domaine. Il peut également faire référence à la découverte de combinaisons de caractéristiques qui, ensemble, offrent une meilleure prédiction de l'indicateur de structure que lorsqu'elles sont considérées individuellement. Par exemple, si la combinaison de la densité des CTU et de la cohérence terminologique permet de prédire l'IS avec une précision de 95 %, leurs poids respectifs pourraient être augmentés et une caractéristique combinée pourrait être ajoutée au vecteur stylométrique. Enfin, il peut s'agir de l'identification de tendances temporelles dans les styles de rédaction des brevets, permettant au système 200 de s'adapter aux évolutions des pratiques rédactionnelles dans différents domaines techniques. Par exemple, si les brevets récents dans le domaine de l'informatique tendent à utiliser des phrases plus courtes et un vocabulaire plus simple, les poids des caractéristiques correspondantes pourraient être ajustés pour refléter cette évolution stylistique.

### Troisième aspect de l'invention : procédé d'entraînement d'un modèle d'apprentissage machine pour l'analyse stylométrique de documents brevets

Un troisième aspect de l'invention concerne un procédé 300 implémenté par ordinateur d'entraînement d'un modèle d'apprentissage machine pour l'analyse stylométrique de documents brevets, chaque document brevet numérique comprenant une description D et un jeu de revendications R.

Le terme « entraînement d'un modèle d'apprentissage machine » désigne le processus par lequel un algorithme d'intelligence artificielle est exposé à un ensemble de données d'entraînement afin d'apprendre à effectuer une tâche spécifique, dans ce cas l'analyse stylométrique de documents brevets. Ce processus implique l'ajustement itératif des paramètres internes du modèle pour optimiser sa capacité à prédire les sorties attendues (indicateur de structure IS et style de répartition SR) à partir des entrées fournies (graphe de données GD et vecteur de caractéristiques stylométriques VCS). À titre d'exemple, le terme « entraînement d'un modèle d'apprentissage machine » peut désigner l'utilisation d'un algorithme de rétropropagation pour ajuster les poids d'un réseau de neurones profond qui apprend à associer les caractéristiques du graphe GD et du vecteur de caractéristiques stylométriques VCS aux indicateurs IS et SR correspondants. Par exemple, on pourrait utiliser un réseau de neurones convolutif (CNN) avec une architecture ResNet-50 pré-entraînée sur ImageNet, puis fine-tuner les dernières couches sur notre jeu de données de brevets. L'algorithme de rétropropagation utilisé pourrait être Adam avec un taux d'apprentissage de 0,001 et une décroissance de poids de 1e-6. Il peut également faire référence à l'application d'une méthode d'optimisation par descente de gradient pour minimiser l'erreur entre les prédictions du modèle et les annotations fournies par les experts sur le jeu de données d'entraînement. Par exemple, on pourrait utiliser l'algorithme de descente de gradient stochastique (SGD) avec un taux d'apprentissage adaptatif, en commençant à 0,1 et en le réduisant d'un facteur 10 tous les 30 epochs. Enfin, il peut s'agir de l'utilisation de techniques d'apprentissage par renforcement pour affiner progressivement la capacité du modèle à capturer les subtilités stylistiques des documents brevets à travers de multiples itérations d'entraînement. Par exemple, on pourrait implémenter un algorithme de Q-learning profond (DQN) où l'agent apprendrait à naviguer dans la structure du brevet pour extraire les caractéristiques les plus pertinentes, avec une fonction de récompense basée sur la précision de la prédiction des indicateurs IS et SR. Un autre exemple serait l'utilisation d'un modèle de Transformers, comme BERT (Bidirectional Encoder Représentations from Transformers), spécialement adapté pour le traitement de données textuelles. BERT pourrait être pré-entraîné sur un large corpus de brevets, puis fine-tuné sur notre jeu de données spécifique avec une tâche de prédiction des indicateurs IS et SR. L'optimisation se ferait avec l'algorithme AdamW, un taux d'apprentissage de 2e-5 et une taille de batch de 32.

Le procédé 300 débute par l'obtention 310 d'un ensemble de documents brevets d'entraînement. Pour chacun de ces documents, le procédé 300 effectue une série d'étapes de traitement.

Tout d'abord, le procédé 300 segmente 320 le document en une partie description D et une partie revendications R.

Ensuite, il procède à l'extraction 330, par analyse syntaxique et sémantique, d'un ensemble de caractéristiques techniques unitaires CTU de la partie revendications R ainsi que d'un ensemble de paragraphes élémentaires PE de la partie description D.

Par la suite, le procédé 300 génère 340 un graphe de données GD qui comprend des noeuds N1 représentant les CTU, des noeuds N2 représentant les PE, et des arêtes orientées A reliant les noeuds et représentant des relations sémantiques.

Le procédé 300 génère 350 également un vecteur de caractéristiques stylométriques VCS qui inclut une distribution spatiale des CTU dans la description D et des scores de similarité sémantique S.

En parallèle, au moins un expert détermine 360 au moins un indicateur de structure IS et un style de répartition SR des CTU dans la description D.

Le terme « un expert » fait référence, dans le contexte de cette invention, à un professionnel qualifié qui possède une expertise approfondie dans l'analyse et l'évaluation des documents brevets. Cet expert est chargé de déterminer manuellement l'indicateur de structure IS et le style de répartition SR des caractéristiques techniques unitaires CTU dans la description D des documents brevets d'entraînement. Son rôle est essentiel pour fournir des annotations de référence fiables qui serviront à entraîner et évaluer le modèle d'apprentissage machine. À titre d'exemple, le terme « un expert » peut désigner un examinateur de brevets expérimenté qui a développé une compréhension approfondie des structures et des styles de rédaction typiques dans divers domaines techniques. Par exemple, un examinateur principal de l'Office européen des brevets (OEB) avec plus de 15 ans d'expérience dans le domaine des technologies de l'information et de la communication, ayant examiné plus de 1000 demandes de brevets et participé à de nombreuses procédures d'opposition. Il peut également faire référence à un ingénieur en propriété intellectuelle spécialisé dans l'analyse et la rédaction de brevets, capable d'identifier finement les nuances structurelles et stylistiques des documents. Par exemple, un ingénieur en propriété intellectuelle travaillant chez un GAFAM avec un doctorat en intelligence artificielle, ayant rédigé plus de 50 demandes de brevets dans le domaine de l'apprentissage automatique et ayant une expérience de 10 ans dans l'analyse de portefeuilles de brevets pour des fusions-acquisitions. Enfin, il peut s'agir d'un chercheur en analyse textuelle spécialisé dans les documents techniques, qui combine des connaissances en linguistique computationnelle et en analyse de brevets pour évaluer la structure et le style des documents. Par exemple, un professeur d'université spécialisé en traitement du langage naturel, ayant publié plus de 50 articles scientifiques sur l'analyse automatique de documents techniques et brevets, et ayant développé des outils d'analyse stylométrique utilisés par plusieurs offices de brevets. On peut également penser à un consultant en stratégie de propriété intellectuelle, ayant travaillé pour de grands cabinets de conseil, par exemple l'un des BIG5, et spécialisé dans l'évaluation de portefeuilles de brevets pour des entreprises technologiques. Avec plus de 20 ans d'expérience dans l'analyse comparative de brevets et l'identification de tendances technologiques, ce consultant serait capable de fournir des annotations IS et SR de haute qualité pour entraîner notre modèle.

Une fois ces étapes accomplies, le procédé 300 construit 370 un jeu de données d'entraînement.

Le terme «jeu de données d'entraînement » désigne l'ensemble structuré d'informations préparées et organisées spécifiquement pour l'entraînement du modèle d'apprentissage machine dédié à l'analyse stylométrique des documents brevets. Ce jeu de données comprend, pour chaque document brevet numérique d'entraînement, des paires d'entrées (graphe de données GD et vecteur de caractéristiques stylométriques VCS) associées aux sorties correspondantes (indicateur de structure IS et style de répartition SR) déterminées par les experts. Il constitue la base sur laquelle le modèle apprend à établir des corrélations et à généraliser ses prédictions. À titre d'exemple, le terme «jeu de données d'entraînement » peut désigner une collection de milliers de documents brevets prétraités, chacun représenté par son graphe GD et son vecteur de caractéristiques stylométriques VCS, accompagnés des annotations IS et SR correspondantes fournies par des experts. Par exemple, un jeu de données contenant 100 000 brevets du domaine de l'intelligence artificielle, extraits de la base de données USPTO et EPO, couvrant une période de 10 ans (2013-2023). Chaque brevet serait représenté par un graphe GD avec une moyenne de 50 noeuds et 200 arêtes, et un vecteur VCS de dimension 1024. Les annotations IS et SR auraient été fournies par un panel de 20 experts internationaux en brevets d'IA. Il peut également faire référence à un ensemble de données augmenté qui inclut des variations synthétiques des documents originaux pour améliorer la robustesse du modèle. Par exemple, on pourrait appliquer des techniques d'augmentation de données textuelles comme la substitution de synonymes, la paraphrase automatique ou la traduction aller-retour, pour générer 5 variations de chaque brevet original, portant ainsi la taille du jeu de données à 600 000 exemples. Enfin, il peut s'agir d'un jeu de données stratifié qui assure une représentation équilibrée de différents domaines techniques, styles de rédaction et structures de brevets pour garantir la généralisation du modèle à une large gamme de documents. Par exemple, le jeu de données pourrait être divisé en 10 sous-domaines de l'IA (apprentissage profond, vision par ordinateur, traitement du langage naturel, etc.), avec une répartition équilibrée de 10 000 brevets par sous-domaine. De plus, il pourrait inclure une distribution équilibrée de différents styles de rédaction (50 % de style américain, 30 % de style européen, 20 % de style asiatique) et de structures de brevets (40 % de brevets de produit, 30 % de brevets de procédé, 30 % de brevets de système). Pour garantir la qualité des annotations, on pourrait mettre en place un processus d'annotation croisée, où chaque brevet serait annoté indépendamment par 3 experts, et seuls les brevets avec un accord inter-annotateurs supérieur à 80 % seraient conservés dans le jeu de données final. De plus, on pourrait inclure un ensemble de brevets « gold standard », annotés par un comité d'experts seniors, qui servirait de référence pour évaluer la performance des annotateurs individuels et assurer la cohérence globale des annotations.

Ce jeu comprend, pour chaque document brevet numérique d'entraînement, des données d'entrée incluant le graphe de données GD et le vecteur de caractéristiques stylométriques VCS, ainsi que des données de sortie incluant l'indicateur de structure IS et le style de répartition SR.

Finalement, le procédé 300 entraîne 380 un modèle d'apprentissage machine sur le jeu de données d'entraînement pour apprendre à prédire l'indicateur de structure IS et le style de répartition SR à partir du graphe de données GD et du vecteur de caractéristiques stylométriques VCS.

### Modes de réalisation du troisième aspect de l'invention

Le troisième aspect de l'invention met en oeuvre les premier, deuxième et troisième modes de réalisation du premier aspect de l'invention.

Ces modes de réalisation, précédemment décrits en détail, ne seront pas répétés dans la présente section afin de préserver la concision et la clarté de la description.

Pour une compréhension complète de ces modes de réalisation, il convient de se référer à leur description antérieure dans le présent document.

### Quatrième aspect de l'invention : procédé de génération automatique d'une description de brevet à partir d'un jeu de revendications par extraction de caractéristiques techniques unitaires

L'invention concerne un procédé 400 implémenté par ordinateur de génération d'une description de brevet à partir d'un jeu de revendications qui comporte plusieurs étapes séquentielles.

Le procédé 400 débute par la réception 410 d'un jeu de revendications R en entrée.

Ensuite, le procédé 400 extrait 420, selon le premier aspect de l'invention, un ensemble de caractéristiques techniques unitaires CTU du jeu de revendications R.

Par la suite, le procédé 400 génère 430 un graphe de données GD selon les premier et deuxième modes de réalisation du premier aspect de l'invention et génère 440 aussi un vecteur de caractéristiques stylométriques VCS selon le troisième mode de réalisation du premier aspect de l'invention.

Le procédé 400 génère 450 également une structure de description SD qui comprend des sections prédéfinies typiques d'une description de brevet, incluant au moins une description détaillée.

Le terme « structure de description » désigne un modèle d'organisation prédéfini qui sert de cadre pour la génération automatique d'une description de brevet. Cette structure comprend un ensemble de sections typiques et standardisées qui reflètent les différentes parties attendues dans une description de brevet bien rédigée. Elle vise à garantir que la description générée couvre tous les aspects essentiels de l'invention de manière claire et complète. À titre d'exemple, le terme « structure de description » peut inclure des sections telles qu'un préambule, un état de la technique, un résumé de l'invention, une description détaillée des modes de réalisation préférés, et une conclusion. Par exemple, pour un brevet sur un nouveau dispositif médical, la structure de description pourrait inclure une section décrivant l'anatomie pertinente, une autre détaillant les limitations des dispositifs existants, puis une description approfondie du fonctionnement et des avantages du nouvel appareil, et enfin une conclusion résumant son potentiel impact sur le domaine. Il peut également comprendre des sous-sections spécifiques pour la description des figures, des exemples de mise en oeuvre, ou des avantages de l'invention. De plus, la structure de description peut être adaptée en fonction du domaine technique du brevet, avec des sections supplémentaires pour les aspects spécifiques à certains types d'inventions, comme la description des composés chimiques pour un brevet pharmaceutique.

Pour chaque section de la structure de description SD, le procédé 400 exécute une séquence d'opérations.

Tout d'abord, le procédé 400 formule 460 une requête Q à partir des caractéristiques techniques unitaires CTU et du vecteur de caractéristiques stylométriques VCS.

Le terme « requête » fait référence, dans le contexte de ce procédé 400, à une demande d'information formulée à partir des caractéristiques techniques unitaires (CTU) extraites du jeu de revendications et du vecteur de caractéristiques stylométriques (VCS) associé. Cette requête est soumise à un modèle de langue préalablement entraîné dans le but de générer un texte pertinent pour une section spécifique de la description du brevet. La requête agit comme une instruction ou un stimulus qui guide le modèle de langue dans la production d'un contenu approprié et cohérent avec les aspects techniques et stylistiques du brevet. À titre d'exemple, le terme « requête » peut désigner une combinaison structurée de mots-clés techniques, de relations sémantiques et d'indicateurs stylistiques extraits des CTU et du VCS, qui est transmise au modèle de langue sous forme d'une séquence vectorielle. Il peut également faire référence à une question formulée en langage naturel, comme « Décrivez le fonctionnement détaillé du composant X mentionné dans la revendication Y, en utilisant un style de phrase concis et technique ». La requête peut aussi inclure des contraintes supplémentaires, comme la longueur souhaitée du texte généré ou la nécessité d'inclure certains termes techniques spécifiques. Par exemple, une requête pourrait être formulée ainsi : « Générer une description détaillée du fonctionnement du composant de filtrage mentionné dans la revendication 3, en utilisant une terminologie technique et en mettant l'accent sur les interactions avec les autres éléments du système de purification d'eau. »

Puis, le procédé 400 soumet 470 la requête Q à un modèle de langue ML préalablement entraîné sur un corpus de descriptions de brevets.

Le terme « modèle de langue » désigne un système d'intelligence artificielle préalablement entraîné sur un corpus de descriptions de brevets, qui permet de générer automatiquement du texte technique cohérent en réponse à des requêtes spécifiques. Dans le contexte de cette invention, le modèle de langue reçoit des requêtes formulées à partir des caractéristiques techniques unitaires et du vecteur de caractéristiques stylométriques pour produire le contenu des différentes sections de la description du brevet. À titre d'exemple, le terme « modèle de langue » peut désigner un système capable de générer une description détaillée d'un composant technique en respectant le style et la terminologie propres aux brevets. Un exemple concret serait un modèle de langue entraîné sur un corpus de brevets dans le domaine des dispositifs médicaux, capable de produire une description précise et cohérente du fonctionnement d'un nouveau cathéter à partir des caractéristiques techniques extraites des revendications. Il peut également inclure un système qui produit des explications techniques adaptées à chaque section prédéfinie de la structure de description. Par exemple, un modèle de langue pourrait être entraîné pour générer une description détaillée du mode de réalisation préféré dans la section correspondante, en mettant l'accent sur les aspects techniques clés et en utilisant un vocabulaire spécifique au domaine des semi-conducteurs. De plus, ce terme peut faire référence à un algorithme d'intelligence artificielle qui transforme les informations techniques extraites des revendications en textes explicatifs cohérents et bien structurés. Par exemple, le terme « modèle de langue » peut faire référence à un réseau de neurones récurrents, comme un modèle LSTM ou GRU, qui a appris à prédire la séquence de mots la plus probable en fonction du contexte fourni par la requête. Concrètement, un modèle LSTM pourrait être utilisé pour générer une description cohérente et fluide du fonctionnement d'un nouveau procédé de fabrication de circuits intégrés, en s'appuyant sur les informations techniques extraites des revendications et en maintenant un enchaînement logique des idées tout au long du texte. Il peut également désigner un modèle de type Transformer, tel que GPT ou BERT, qui utilise un mécanisme d'attention pour capturer les dépendances à long terme dans le texte et générer des descriptions cohérentes. De plus, le modèle de langue peut être spécialisé dans un domaine technique spécifique, comme les brevets pharmaceutiques ou les brevets de dispositifs mécaniques, grâce à un entraînement sur un sous-ensemble ciblé de descriptions de brevets.

Ensuite, le modèle de langue ML génère 480 un texte T correspondant au contenu de la section. Enfin, le procédé 400 insère 490 le texte généré T dans la section correspondante selon le style de répartition déterminé par l'analyse du graphe de données GD.

**Mode de réalisation particulier du quatrième aspect de l'invention : optimisation itérative du contenu généré**

Dans un mode de réalisation particulier du quatrième aspect de l'invention, le procédé 400 procède à l'optimisation 491 de la description générée. Cette optimisation commence par le calcul d'un score de couverture SC selon les métriques définies dans le troisième mode de réalisation du premier aspect de l'invention.

Le terme « score de couverture » fait référence à une mesure quantitative qui évalue dans quelle mesure la description générée par le procédé 400 couvre de manière exhaustive et pertinente les caractéristiques techniques unitaires (CTU) extraites du jeu de revendications. Par exemple, un score de couverture de 85 % indiquerait que la grande majorité des éléments techniques clés des revendications sont bien expliqués dans la description, avec peut-être seulement quelques aspects mineurs manquants ou moins détaillés qui nécessiteraient une optimisation supplémentaire. Ce score est calculé selon des métriques prédéfinies qui prennent en compte différents aspects, tels que la présence et la fréquence des termes techniques clés, la couverture des relations sémantiques entre les CTU, et l'adéquation du style rédactionnel. Il sert de critère d'optimisation pour guider le processus itératif de génération de contenu complémentaire jusqu'à ce qu'un niveau de couverture satisfaisant soit atteint. À titre d'exemple, le terme « score de couverture » peut désigner un pourcentage qui reflète la proportion de CTU du jeu de revendications qui sont effectivement mentionnées et expliquées dans la description générée. Concrètement, si un jeu de revendications contient 20 caractéristiques techniques unitaires et que la description générée en couvre 15 de manière satisfaisante, le score de couverture serait de 75 %. Il peut également faire référence à une mesure de similarité cosinus entre le vecteur de caractéristiques stylométriques (VCS) du jeu de revendications et celui de la description générée, indiquant ainsi la cohérence stylistique entre les deux parties. Le score de couverture peut aussi être calculé en combinant plusieurs métriques, comme la précision et le rappel des termes techniques, avec des pondérations adaptées à l'importance relative de chaque aspect. Par exemple, pour un brevet dans le domaine de la chimie, le score de couverture pourrait accorder plus de poids à la présence des noms de composés et des réactions clés, tout en considérant également la couverture des paramètres de procédé et des résultats obtenus, afin de refléter l'exhaustivité et la pertinence de la description générée par rapport aux éléments essentiels des revendications.

Lorsque le score de couverture SC est inférieur à un seuil prédéfini, le procédé 400 génère des requêtes Q' complémentaires. Après quoi, le procédé 400 soumet les requêtes complémentaires Q' au modèle de langue ML et insère le contenu additionnel selon la distribution spatiale des CTU définie dans le vecteur de caractéristiques stylométriques VCS.

Le procédé 400 répète ces sous-étapes d'optimisation jusqu'à ce que le score de couverture SC atteigne le seuil prédéfini ou qu'un nombre maximal d'itérations soit atteint.

Finalement, le procédé 400 produit 492 la description de brevet finale.

### Cinquième aspect de l'invention : architecture du système informatique pour la génération de descriptions de brevets

Le système 500 informatique pour la génération d'une description de brevet à partir d'un jeu de revendications intègre plusieurs modules fonctionnels interconnectés.

Le système 500 comprend une interface d'entrée 510 conçue pour recevoir un jeu de revendications R ainsi que le système 500 d'analyse stylométrique selon le deuxième aspect de l'invention.

Le terme « interface d'entrée » désigne un composant logiciel ou matériel du système 500 informatique qui est spécifiquement conçu pour recevoir et traiter les données initiales nécessaires au processus de génération de la description de brevet. Dans le contexte de cette invention, l'interface d'entrée est conçue pour accepter deux types d'informations essentielles : le jeu de revendications R et les données provenant du système 500 d'analyse stylométrique. Cette interface agit comme un point d'entrée structuré qui assure la réception correcte et la validation préliminaire des données avant leur traitement par les autres modules du système 500. À titre d'exemple, le terme « interface d'entrée » peut désigner une interface utilisateur 260 graphique qui permet à un utilisateur de télécharger ou de saisir manuellement le jeu de revendications R, tout en fournissant des options pour spécifier des paramètres d'analyse stylométrique. Il peut également s'agir d'un formulaire web intégré à une plateforme de gestion de brevets, permettant aux utilisateurs de soumettre leurs revendications et de sélectionner des options d'analyse prédéfinies. Il peut également faire référence à une API (Interface de Programmation d'Application) qui permet l'intégration automatisée du système 500 avec d'autres outils de gestion de brevets, facilitant ainsi l'importation directe des revendications et des données d'analyse. Par exemple, l'API pourrait être conçue pour se connecter à une base de données de brevets existante et extraire automatiquement les revendications pertinentes en fonction de critères spécifiés. Enfin, l'interface d'entrée peut inclure des fonctionnalités de prétraitement, comme la normalisation du format des revendications ou la vérification de la compatibilité des données avec les exigences du système 500 d'analyse stylométrique.

En complément, le système 500 intègre un module de génération 520 de description qui utilise le graphe de données GD et le vecteur de caractéristiques stylométriques VCS générés par le système 500 d'analyse stylométrique.

En outre, le système 500 intègre un module d'optimisation 530 qui exploite les métriques de structure hiérarchique et les indicateurs de couverture technique définis dans le troisième mode de réalisation du premier aspect de l'invention.

Le système 500 incorpore également un modèle de langue ML 540 préentraîné sur un corpus de descriptions de brevets ainsi qu'un module de contrôle conçu pour ajuster la génération de description selon les scores de similarité sémantique S calculés selon le deuxième mode de réalisation du premier aspect de l'invention.

Enfin, le système 500 comprend une interface de sortie 560 conçue pour fournir la description générée D.

Le terme « interface de sortie » fait référence à un composant du système 500 informatique qui est responsable de la présentation et de la transmission de la description de brevet générée D aux utilisateurs ou à d'autres systèmes. Cette interface est conçue pour formater, afficher et/ou exporter le résultat final du processus de génération de manière claire, accessible et conforme aux standards de présentation des documents brevets. L'interface de sortie joue un rôle clé dans la communication efficace du contenu généré, en assurant que la description de brevet est présentée de manière professionnelle et exploitable. À titre d'exemple, le terme « interface de sortie » peut désigner un module de rendu qui convertit la description générée en un document formaté selon les normes de l'office des brevets, incluant la mise en page, la numérotation des paragraphes et l'intégration éventuelle de figures. Ce module pourrait utiliser des modèles prédéfinis conformes aux exigences de différents offices de brevets internationaux, garantissant ainsi la conformité de la description générée. Il peut également faire référence à un tableau de bord interactif qui permet aux utilisateurs de visualiser la description générée, avec des options pour naviguer entre les différentes sections, effectuer des recherches dans le texte ou comparer la description avec le jeu de revendications original. Ce tableau de bord pourrait inclure des fonctionnalités avancées telles que la mise en évidence des différences entre la description générée et les revendications initiales, ou encore la possibilité de collaborer avec d'autres utilisateurs pour affiner la description. Enfin, l'interface de sortie peut inclure des fonctionnalités d'export vers différents formats de fichiers (par exemple, PDF, DOCX, XML) pour faciliter l'intégration de la description générée dans les flux de travail existants de dépôt de brevets. En plus de ces formats courants, l'interface pourrait également prendre en charge l'export vers des formats spécifiques aux brevets, tels que le format ST.25 de l'OMPI pour le listage des séquences ou le format XML conforme à la norme DOCX de l'OEB. L'export vers des formats structurés comme JSON ou YAML pourrait également être proposé pour faciliter l'intégration avec des outils d'analyse ou de traduction automatisés.

### Mode de réalisation particulier du cinquième aspect de l'invention :

Dans un mode de réalisation particulier du cinquième aspect de l'invention, le système 500 inclut un module de contrôle 560 qui est conçu pour ajuster la génération de description selon les scores de similarité sémantique, S, calculés selon le deuxième mode de réalisation du premier aspect de l'invention.

### Conclusion

Nous avons décrit et illustré l'invention. Toutefois, l'invention ne se limite pas aux formes de réalisations que nous avons présentées. En effet, de nombreuses combinaisons des variantes, alternatives, modes de réalisation et mises en oeuvre, peuvent être envisagées sans nécessiter de modifications substantielles de l'invention. Ainsi, un expert du domaine peut déduire d'autres variantes, alternatives, modes de réalisation et mises en oeuvre, à la lecture de la description et des figures annexées et en fonction des contraintes économiques, ergonomiques, dimensionnelles à respecter.

Par ailleurs, lorsqu'une expression utilise le terme « au moins un », cela signifie que l'élément ou la caractéristique en question peut être présent en une seule occurrence ou en plusieurs occurrences, comprenant donc un, deux, trois ou plus d'éléments ou de caractéristiques, sans limite supérieure spécifiée.

D'autre part, lorsqu'un élément est « conçu » pour remplir une fonction particulière, cela signifie que cet élément est créé spécifiquement dans le but de remplir cette fonction particulière.

Toutefois, selon les besoins et les ressources disponibles, on pourra envisager d'utiliser un élément existant, que l'on modifiera ou adaptera pour remplir cette fonction particulière, et ce, sans nécessiter de modifications substantielles de l'invention.

En ce qui concerne l'expression « tout ou partie», elle indique une flexibilité dans la sélection ou l'utilisation des éléments ou des données mentionnés. Cette expression signifie que l'action ou la caractéristique décrite peut s'appliquer à l'ensemble complet des éléments ou des données en question, ou seulement à une portion sélectionnée de ceux-ci. L'utilisation de « tout ou parties permet ainsi d'englober un large éventail de possibilités, allant de l'utilisation intégrale à une utilisation partielle, sans spécifier de limite inférieure ou supérieure précise quant à la quantité ou à la proportion concernée.

Il convient de noter que les exemples fournis tout au long de cette description sont présentés à titre illustratif et non limitatif. Ces exemples visent à faciliter la compréhension de l'invention par l'homme du métier, en fournissant des illustrations concrètes de mise en oeuvre possible.

Cependant, l'invention ne se limite pas à ces exemples spécifiques. L'homme du métier comprendra que ces exemples peuvent être généralisés, adaptés ou modifiés en fonction des besoins spécifiques, des avancées technologiques ou des contraintes particulières, sans pour autant s'écarter de l'esprit de l'invention. Ainsi, chaque fois qu'un exemple est donné, il doit être interprété comme englobant non seulement l'exemple spécifique mentionné, mais aussi toutes les variantes et alternatives techniques équivalentes qui remplissent la même fonction ou atteignent le même objectif dans le contexte de l'invention.

L'invention peut faire l'objet de nombreuses variantes et applications autres que celles décrites ci-dessus. En particulier, sauf indication contraire, les différentes caractéristiques structurelles et fonctionnelles de chaque mise en oeuvre particulière décrite ci-dessus ne doivent pas être considérées comme combinées et/ou étroitement et/ou inextricablement liées les unes aux autres, mais, au contraire, comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

1. Procédé (100) implémenté par ordinateur d'analyse stylométrique de la structure d'un document brevet numérique comprenant une description, D, et un jeu de revendications, R, le procédé (100) comprenant :
- une étape de segmentation (110) du document brevet numérique en une partie description, D, et une partie revendications, R,
- une étape d'extraction (120), par analyse syntaxique et sémantique,
- - d'un ensemble de caractéristiques techniques unitaires, CTU, de la partie revendications, R, et
- - d'un ensemble de paragraphes élémentaires, PE, de la partie description, D,
- une étape de génération (130) d'un graphe de données, GD, comprenant,
- - des noeuds, N1, représentant les caractéristiques techniques unitaires, CTU,
- - des noeuds, N2, représentant les paragraphes élémentaires, PE, et
- - des arêtes orientées, A, reliant les noeuds, N1, N2, et représentant des relations sémantiques entre les caractéristiques techniques unitaires, CTU, et les paragraphes élémentaires, PE,
- une étape de calcul (140), pour chaque arête, A, du graphe de données, GD, d'un score de similarité sémantique, S, entre la caractéristique technique unitaire, CTU, et le paragraphe élémentaire, PE, reliés par l'arête, A,
- une étape de génération (150) d'un vecteur de caractéristiques stylométriques, VCS, comprenant,
- - une distribution spatiale des caractéristiques techniques unitaires, CTU, dans la description, D, et
- - les scores de similarité sémantique, S, entre chaque caractéristique technique unitaire, CTU, et les paragraphes élémentaires, PE, associés,
- - un indicateur de densité des caractéristiques techniques unitaires, CTU, par paragraphe élémentaire, PE,
- une étape d'analyse (160) de la topologie du graphe de données, GD, et du vecteur de caractéristiques stylométriques, VCS, par un modèle d'apprentissage machine entraîné pour déterminer,
- - au moins un indicateur de structure, IS, du document brevet numérique, et
- - un style de répartition des caractéristiques techniques unitaires, CTU, dans la description, D.

2. Procédé (100) selon la revendication 1, dans lequel l'étape de génération (150) du graphe de données, GD, comprend en outre,
- une étape d'attribution (151) à chaque arête, A, d'une pluralité d'étiquettes sémantiques hiérarchisées représentant,
- - un type principal de relation sémantique entre la caractéristique technique unitaire, CTU, et le paragraphe élémentaire, PE,
- - des sous-types de relations sémantiques caractérisant des aspects spécifiques de la relation principale, et/ou
- - des relations de dépendance entre les différents types de relations sémantiques,
- une étape d'enrichissement (152) de chaque arête, A, par des attributs comprenant,
- - des scores quantifiant la force de la relation sémantique,
- - des métriques de cohérence contextuelle, et/ou
- - des indicateurs de spécificité technique,
- une étape de génération (153) d'indicateurs structurels comprenant,
- - la distribution spatiale des caractéristiques techniques unitaires, CTU, dans la description,
- - une matrice de co-occurrence des types de relations,
- - des métriques de densité pondérées par la pertinence technique des relations,
- - des métriques évaluant la connectivité entre les revendications, et/ou
- - des indicateurs de liaison revendications-description.

3. Procédé (100) selon l'une quelconque des revendications 1 à 2, dans lequel l'étape de calcul (140) du score de similarité sémantique, S, pour chaque arête, A, comprend,
- l'application d'une analyse tensorielle multi-niveau incluant,
- - une mesure d'analyse lexicale utilisant des embeddings spécifiques aux brevets,
- - une mesure d'analyse syntaxique basée sur des graphes de dépendance, et/ou
- - une mesure d'analyse sémantique contextuelle par domaine technique,
- la combinaison adaptative des différentes mesures d'analyse selon,
- - le domaine technique du brevet,
- - la position hiérarchique des caractéristiques techniques, et/ou
- - le contexte d'utilisation dans la description.

4. Procédé (100) selon l'une quelconque des revendications 1 à 3, dans lequel le vecteur de caractéristiques stylométriques, VCS, comprend en outre, au moins l'un parmi,
- des métriques de structure hiérarchique caractérisant,
- - la répartition des caractéristiques techniques unitaires, CTU, par niveau de dépendance technique,
- - les relations entre caractéristiques techniques unitaires, CTU, de différents niveaux hiérarchiques, et/ou
- - la cohérence des chaînes de dépendance technique,
- des indicateurs de couverture technique mesurant,
- - le degré d'explicitation des caractéristiques techniques unitaires, CTU, dans la description,
- - la profondeur des explications techniques associées, et/ou
- - la distribution des supports techniques dans la description,
- des métriques de style rédactionnel spécifiques aux brevets incluant,
- - des patterns de présentation des caractéristiques techniques,
- - des schémas récurrents d'organisation des informations techniques, et/ou
- - des indicateurs de complétude technique
- des statistiques sur la longueur moyenne et l'écart-type des phrases dans les paragraphes élémentaires, PE,
- des mesures de richesse lexicale basées sur le ratio type-occurrence et l'indice de Yule,
- des indicateurs de fréquence d'utilisation des structures syntaxiques propres aux brevets.

5. Système (200) implémenté par ordinateur d'analyse stylométrique de documents brevets comprenant,
- au moins une base de données (210) conçue pour stocker une pluralité de documents brevets, chaque document brevet numérique comprenant une description, D, et un jeu de revendications, R,
- un module de segmentation (220) conçu pour segmenter chaque document brevet numérique en une partie description, D, et une partie revendications, R,
- un module d'extraction (230) conçu pour extraire, par analyse syntaxique et sémantique,
- - un ensemble de caractéristiques techniques unitaires, CTU, de chaque partie revendications, R, et
- - un ensemble de paragraphes élémentaires, PE, de chaque partie description, D,
- un module de génération de graphe (240) conçu pour générer, pour chaque document brevet numérique, un graphe de données, GD, comprenant,
- - des noeuds, N1, représentant les caractéristiques techniques unitaires, CTU,
- - des noeuds, N2, représentant les paragraphes élémentaires, PE,
- - des arêtes orientées, A, reliant les noeuds, N1, N2, et représentant des relations sémantiques,
- un module d'analyse de graphe (250) conçu pour,
- - générer, pour chaque document brevet numérique, un vecteur de caractéristiques stylométriques, VCS, comprenant une distribution spatiale des CTU dans la description, D, les scores de similarité sémantique, S, entre les CTU et les PE,
- - analyser la topologie de chaque graphe de données, GD, et chaque vecteur, VCS, par un modèle d'apprentissage machine entraîné pour déterminer au moins un indicateur de structure, IS, et un style de répartition, SR, des CTU dans la description, D,
- une interface utilisateur (260) conçue pour afficher, pour au moins un document brevet numérique, le graphe de données, GD, l'indicateur de structure, IS, et le style de répartition, SR.

6. Système (200) selon la revendication 5, dans lequel le module d'analyse de graphe (250) est en outre conçu pour,
- calculer des métriques de densité technique adaptative comprenant,
- - une densité pondérée par l'importance hiérarchique des CTU, et
- - une densité normalisée par domaine technique,
- analyser la distribution spatiale des CTU en tenant compte de,
- - la structure hiérarchique des revendications, et
- - les dépendances techniques entre caractéristiques.

7. Système (200) selon l'une quelconque des revendications 5 à 6, comprenant en outre, un module d'optimisation (270) conçu pour,
- ajuster dynamiquement les poids des différentes caractéristiques stylométriques dans le vecteur, VCS, en fonction de,
- - leur pouvoir prédictif sur l'indicateur de structure, IS,
- - leur pertinence technique dans le domaine concerné,
- - leur impact sur la cohérence globale du document,
- adapter les paramètres d'analyse en fonction,
- - du domaine technique du brevet,
- - du style de rédaction identifié, et
- - des retours d'expérience sur les prédictions antérieures.

8. Procédé (300) implémenté par ordinateur d'entraînement d'un modèle d'apprentissage machine pour l'analyse stylométrique de documents brevets, chaque document brevet numérique comprenant une description, D, et un jeu de revendications, R, le procédé (300) comprenant,
- une étape d'obtention (310) d'un ensemble de documents brevets d'entraînement,
- pour chaque document brevet numérique d'entraînement,
- - une étape de segmentation (320) du document en une partie description, D, et une partie revendications, R,
- - une étape d'extraction (330), par analyse syntaxique et sémantique, d'un ensemble de caractéristiques techniques unitaires, CTU, de la partie revendications, R, et d'un ensemble de paragraphes élémentaires, PE, de la partie description, D,
- - une étape de génération (340) d'un graphe de données, GD, comprenant des noeuds, N1, représentant les CTU, des noeuds, N2, représentant les PE, et des arêtes orientées, A, reliant les noeuds et représentant des relations sémantiques,
- - une étape de génération (350) d'un vecteur de caractéristiques stylométriques, VCS, comprenant une distribution spatiale des CTU dans la description, D, et des scores de similarité sémantique, S,
- - une étape de détermination (360), par au moins un expert, d'au moins un indicateur de structure, IS, et d'un style de répartition, SR, des CTU dans la description, D,
- une étape de construction (370) d'un jeu de données d'entraînement comprenant, pour chaque document brevet numérique d'entraînement,
- - des données d'entrée incluant le graphe de données, GD, et le vecteur de caractéristiques stylométriques, VCS, et
- - des données de sortie incluant l'indicateur de structure, IS, et le style de répartition, SR,
- une étape d'entraînement (380) d'un modèle d'apprentissage machine sur le jeu de données d'entraînement pour apprendre à prédire l'indicateur de structure, IS, et le style de répartition, SR, à partir du graphe de données, GD, et du vecteur de caractéristiques stylométriques, VCS.

9. Procédé (300) selon la revendication 8, dans lequel l'étape de génération (340) du graphe de données, GD, comprend en outre,
- une étape d'attribution à chaque arête, A, d'une pluralité d'étiquettes sémantiques hiérarchisées représentant,
- - un type principal de relation sémantique entre la caractéristique technique unitaire, CTU, et le paragraphe élémentaire, PE,
- - des sous-types de relations sémantiques caractérisant des aspects spécifiques de la relation principale, et/ou
- - des relations de dépendance entre les différents types de relations sémantiques,
- une étape d'enrichissement de chaque arête, A, par des attributs comprenant,
- - des scores quantifiant la force de la relation sémantique,
- - des métriques de cohérence contextuelle, et/ou
- - des indicateurs de spécificité technique,
- une étape de génération d'indicateurs structurels comprenant,
- - la distribution spatiale des caractéristiques techniques unitaires, CTU, dans la description,
- - une matrice de co-occurrence des types de relations, et/ou
- - des métriques de densité pondérées par la pertinence technique des relations.

10. Procédé (300) selon l'une quelconque des revendications 8 à 9, dans lequel l'étape de calcul du score de similarité sémantique, S, pour chaque arête, A, comprend,
- l'application d'une analyse tensorielle multi-niveau incluant,
- - une mesure d'analyse lexicale utilisant des embeddings spécifiques aux brevets,
- - une mesure d'analyse syntaxique basée sur des graphes de dépendance, et/ou
- - une mesure d'analyse sémantique contextuelle par domaine technique,
- la combinaison adaptative des différentes mesures d'analyse selon,
- - le domaine technique du brevet,
- - la position hiérarchique des caractéristiques techniques, et/ou
- - le contexte d'utilisation dans la description.

11. Procédé (300) selon l'une quelconque des revendications 8 à 10, dans lequel le vecteur de caractéristiques stylométriques, VCS, comprend en outre, au moins l'un parmi,
- des métriques de structure hiérarchique caractérisant,
- - la répartition des caractéristiques techniques unitaires, CTU, par niveau de dépendance technique,
- - les relations entre caractéristiques techniques unitaires, CTU, de différents niveaux hiérarchiques, et/ou
- - la cohérence des chaînes de dépendance technique,
- des indicateurs de couverture technique mesurant,
- - le degré d'explicitation des caractéristiques techniques unitaires, CTU, dans la description,
- - la profondeur des explications techniques associées, et/ou
- - la distribution des supports techniques dans la description,
- des métriques de style rédactionnel spécifiques aux brevets incluant,
- - des patterns de présentation des caractéristiques techniques,
- - des schémas récurrents d'organisation des informations techniques, et/ou
- - des indicateurs de complétude technique
- des statistiques sur la longueur moyenne et l'écart-type des phrases dans les paragraphes élémentaires, PE,
- des mesures de richesse lexicale basées sur le ratio type-occurrence et l'indice de Yule,
- des indicateurs de fréquence d'utilisation des structures syntaxiques propres aux brevets.

12. Procédé (400) implémenté par ordinateur de génération d'une description de brevet à partir d'un jeu de revendications, comprenant,
- une étape de réception (410) d'un jeu de revendications, R, en entrée,
- une étape d'extraction (420), selon le procédé de la revendication 1, d'un ensemble de caractéristiques techniques unitaires, CTU, du jeu de revendications, R,
- une étape de génération (430) d'un graphe de données, GD, selon les revendications 1 et 2,
- une étape de génération (440) d'un vecteur de caractéristiques stylométriques, VCS, selon la revendication 4,
- une étape de génération (450) d'une structure de description, SD, comprenant des sections prédéfinies typiques d'une description de brevet, incluant au moins une description détaillée,
- pour chaque section de la structure de description, SD,
- - une étape de formulation (460) d'une requête, Q, à partir des caractéristiques techniques unitaires, CTU, et du vecteur de caractéristiques stylométriques, VCS,
- - une étape de soumission (470) de la requête, Q, à un modèle de langue, ML, préalablement entraîné sur un corpus de descriptions de brevets,
- - une étape de génération (480) par le modèle de langue, ML, d'un texte, T, correspondant au contenu de la section,
- - une étape d'insertion (490) du texte généré, T, dans la section correspondante selon le style de répartition déterminé par l'analyse du graphe de données, GD.

13. Procédé (400) selon la revendication 12 comprenant en outre,
- une étape d'optimisation (491) de la description générée par,
- - calcul d'un score de couverture, SC, selon les métriques définies dans la revendication 4,
- - si le score de couverture, SC, est inférieur à un seuil prédéfini, génération de requêtes, Q', complémentaires,
- - soumission des requêtes complémentaires, Q', au modèle de langue, ML,
- - insertion du contenu additionnel selon la distribution spatiale des CTU définie dans le vecteur de caractéristiques stylométriques VCS,
- - répétition des sous-étapes de l'étape d'optimisation de la description générée jusqu'à ce que le score de couverture, SC, atteigne le seuil prédéfini ou qu'un nombre maximal d'itérations soit atteint,
- une étape de production (492) de la description de brevet finale.

14. Système (500) informatique pour la génération d'une description de brevet à partir d'un jeu de revendications, le système comprenant,
- une interface d'entrée (510) conçue pour recevoir un jeu de revendications, R,
- le système (200) d'analyse stylométrique selon la revendication 5,
- un module de génération (520) de description conçu pour utiliser,
- - le graphe de données, GD,
- - le vecteur de caractéristiques stylométriques, VCS, générés par le système d'analyse stylométrique,
- un module d'optimisation (530) utilisant,
- - les métriques de structure hiérarchique, et
- - les indicateurs de couverture technique définis dans la revendication 4
- un modèle de langue, ML, (540) préentraîné sur un corpus de descriptions de brevets,
- une interface de sortie (550) conçue pour fournir la description générée, D.

15. Système (500) selon la revendication 14 comprenant en outre,
- un module de contrôle (560) conçu pour ajuster la génération de description selon les scores de similarité sémantique, S, calculés selon la revendication 3.
